# EUROPEAN PATENT SPECIFICATION

(11) **EP 3 531 345 B1**
(45) Date of publication and mention of the grant of the patent: **09.06.2021**
(21) Application number: 19156643.9
(22) Date of filing: 12.02.2019
(51) Int. Cl.: G06K 15/02, G06F 3/12

(54) **IMAGE PROCESSING SYSTEM, IMAGE PROCESSING APPARATUS, IMAGE PROCESSING METHOD AND PROGRAM**
BILDVERARBEITUNGSSYSTEM, BILDVERARBEITUNGSVORRICHTUNG, BILDVERARBEITUNGSVERFAHREN UND PROGRAMM
SYSTÈME, APPAREIL, PROCÉDÉ DE TRAITEMENT D'IMAGES ET PROGRAMME

(30) Priority: 26.02.2018 JP 2018031762
(43) Date of publication of application: 28.08.2019
(73) Proprietor: KONICA MINOLTA, INC., Tokyo 100-7015 (JP)
(72) Inventor: Inoda, Ryosuke, Tokyo 100-7015 (JP)
(74) Representative: Hoffmann Eitle

(56) References cited:
- EP-A2- 2 333 699
- JP-A- 2010 155 433
- US-A1- 2006 187 488
- US-A1- 2010 231 952

## Description

### CROSS-REFERENCE TO RELATED APPLICATIONS

The entire disclosure of Japanese Patent Application No. 2018-31762, filed on Feb. 26, 2018, is incorporated herein by reference in its entirety.

### BACKGROUND

### Technological Field

The present invention relates to an image processing system, an image processing apparatus, an image processing method, and a program for executing an image process for calibration to print data.

### Description of the Related art

Multiple print data are necessary to perform package printing for a packaging box or the like in accordance with its development plan. Furthermore, each surface to be printed tends to be enlarged. Currently, the package printing has been executed through offset printing. In most of the case, the time-consuming process for data printing such as the RIP process and the color conversion process is expected to be completed before start of the package printing (for example, only the RIP process is executed in the nighttime preceding the day for executing the printing operation). As for the ink-jet recording apparatus, the image process for calibration (hereinafter referred to as "calibration process") has to be executed in accordance with the state of the printer engine (for example, nozzle clogging) just before start of printing. The calibration process to be described hereinafter refers to the image process for correcting the print data in accordance with characteristics (state) of the printer engine.

The ink-jet recording apparatus forms (records) an image on a recording material such as a sheet of paper by discharging ink droplets from nozzles of an ink-jet head. However, the ink-jet recording apparatus may cause the risk of nozzle discharge fault owing to air mixed into the nozzle of the ink-jet head, and adhesion of foreign matter such as paper dust around the nozzle. The nozzle fault correction process may be exemplified as the calibration process. In the case of clogging of the specific nozzle, the nozzle fault correction may be executed to suppress image failure (generation of white streak) owing to the nozzle fault by adjusting (interpolation process) the amount of ink to be discharged from the nozzle adjacent to (for example, on the left or right side of) the specific nozzle.

There are two modes of image process in printing, that is, a first process such as the RIP process and the color conversion process independent of the printer engine state, and a second process such as the calibration process dependent on the printer engine state. The first process may be executed asynchronously with printing, resulting in the process with high flexibility without being limited to the processing time. On the contrary, it is necessary to execute the second process synchronously with the printing operation, thus restricting the content of the process.

If the multiple-page job, each page of which has a large size (size B1) requires the ink of many colors (CMYKOGV) for printing, the image process for calibration (second process) may take a long time. This may cause the problem that the image process cannot make it in time for the start of printing the respective pages, failing to execute the real time output. In the case that the printing paper size is not so large (size B2 or smaller), the hardware specific to the image process for calibration is used to secure the performance. In the case that the printing paper size is large (size B1 or larger), it may be difficult for the hardware to cope with the job in regards to cost, thus requiring the software for executing the process. Upon execution of the multiple-page job, the time period required for the calibration process has to be reduced by reusing the result of the calibration process to the other page, for example.

PTL 1 discloses the technology which reuses results of the calibration process for reducing the time period required for the calibration process. The reuse of results of the calibration process takes the type of ink (recording agent) as a parameter.

Further, PTL 2 discloses a printing apparatus that performs variable data printing and in PTL 2 it is determined whether or not a reusable object equal to a reusable object reusable in all of a plurality of page data included in the page data to be printed is stored in a storage region of a storage device. When it is determined that the reusable object equal to the reusable object is not stored in the storage region of the storage device, the reusable object is stored in the storage region of the storage device. A control means is provided to perform control to perform proof printing of the page data.

Also, PTL 3 discloses a print server which functions as an image processing device that extracts the reusable data of each object to be used on multiple pages within the file and prepares the form data by synthesizing the extracted reusable data. The print server of PTL 3 prepares page data to be used for printing by synthesizing the prepared form data and the data of each object that is not contained in the form data.

### Citation List

### Patent Literature

PTL 1: Japanese Unexamined Patent Application Publication No. 2013-229652
PTL 2: JP 2010 155433 A
PTL 3: US 2006/187488 A1

### Summary

It is impossible for the reuse method implemented by determining the ink type as described in PTL 1 to cope with the above-described problem, that is, to reduce the calibration process time period.

It is an object of the present invention to reduce the time period required to execute the image process (second process) for calibration to the page to be processed.

This objection is achieved by subject-matter which is defined in the independent claims of the attached set of claims.

According to an aspect of the present invention, the image processing system reflecting one aspect of the present invention includes a first image detector which compares first image data for reference with second image data to be processed, and detects a first pixel group from the second image data, the first pixel group having coordinates and constituting pixels, which are the same as those of a pixel group of the first image data, a second image detector which compares the first image data with the second image data, and detects a second pixel group from the second image data, the second pixel group having a coordinate in a main scanning direction orthogonal to a paper conveying direction, and constituting pixels, which are the same as those of the pixel group of the first image data, but a coordinate in the paper conveying direction different from that of the pixel group of the first image data, a storage unit which stores reusable region information including information relating to the first pixel group and the second pixel group for each of image data contained in a print job, and an image processor which executes an image process for correction to the image data to generate corrected image data based on state information relating to the main scanning direction of a printer engine for forming an image on a recording material, and the reusable region information.

Upon generation of the corrected image data from the second image data, the image processor reuses a result of image process for correction to the pixel group of the first image data at the same coordinates for a region of the first pixel group of the second image data, reuses a result of image process for correction to the pixel group of the first image data on the same axis in the paper conveying direction for a region of the second pixel group of the second image data, and newly executes the image process for correction to a region of other pixel groups which have not been detected as the first pixel group and the second pixel group of the second image data.

According to at least an embodiment of the present invention, results of executing image process for correction to the first image data for reference are reused to reduce the time period for executing the second process to the second image data to be processed.

Description of the embodiments below will clarify issues, configuration, and effects other than those mentioned above.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention:

Fig. 1 is an explanatory view of a structure example of an image forming system according to a first embodiment of the present invention;
Fig. 2 is an explanatory view schematically showing the image forming system according to the first embodiment of the present invention;
Figs. 3A and 3B are explanatory views showing an arrangement example of a head unit and an image reader of an ink-jet recording apparatus according to the first embodiment of the present invention, in which Fig. 3A is a side view and Fig. 3B is a top view ;
Fig. 4 is a block diagram showing a structure example of a control system for the ink-jet recording apparatus according to the first embodiment of the present invention;
Fig. 5 is a block diagram showing a hardware structure example of a computer of each device for the image forming system according to the first embodiment of the present invention;
Fig. 6 is a block diagram showing a function structure example of a control unit for a first image processing apparatus according to the first embodiment of the present invention;
Fig. 7 is a conceptual diagram showing an example of tag bit data;
Figs. 8A and 8B are conceptual diagrams showing a relationship between image data and tag bit data, in which Fig. 8A shows an example of the image data, and Fig. 8B shows the tag bit data corresponding to the image data;
Fig. 9 is an explanatory view showing an example of reusable region segment according to the first embodiment of the present invention;
Fig. 10 is an explanatory view showing a reusable region locating process according to the first embodiment of the present invention;
Fig. 11 is a block diagram showing a function structure example of the control unit for a second image processing apparatus according to the first embodiment of the present invention;
Fig. 12 is a flowchart representing a procedure example of a first process executed by the first image processing apparatus according to the first embodiment of the present invention;
Fig. 13 is a flowchart representing a procedure example of a reusable region locating process in the first process as shown in Fig. 12;
Fig. 14 is a flowchart representing a procedure example of a second process executed by the second image processing apparatus according to the first embodiment of the present invention;
Fig. 15 is a flowchart representing a procedure example of a calibration process to the Nth page in the second process as shown in Fig. 14;
Fig. 16 is a block diagram showing a structure example of the second image processing apparatus according to a second embodiment of the present invention; and
Fig. 17 is a top view of an example of an ink-jet head according to a fourth embodiment of the present invention.

### Detailed Description of Embodiments

Hereinafter, an example of mode for carrying out the present invention (hereinafter referred to as "embodiment") will be described referring to the drawings. However, the scope of the invention is not limited to the disclosed embodiments. The components with substantially the same functions or structures described in the specification and the drawings will be designated with the same codes, and explanations thereof, thus will be omitted.

### First Embodiment

### [Overall structure of image forming system]

Firstly, an image forming system according to a first embodiment of the present invention will be described.

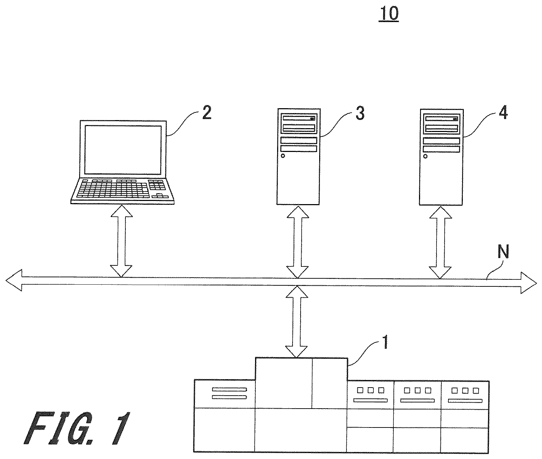

Fig. 1 is an explanatory view showing a structure example of an image forming system 10 according to the first embodiment.

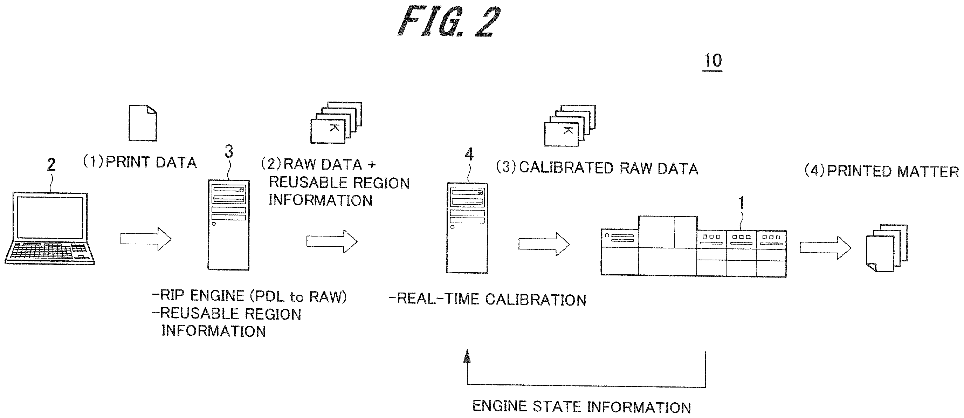

Fig. 2 is an explanatory view schematically showing the image forming system 10.

The image forming system 10 includes an ink-jet recording apparatus 1, a terminal device 2, a first image processing apparatus 3, and a second image processing apparatus 4, which are mutually communicably connected via a network N. In this embodiment, the ink-jet recording apparatus 1 is exemplified as the apparatus for forming an image on a sheet of paper. The first image processing apparatus 3 and the second image processing apparatus 4 constitute an image processing system.

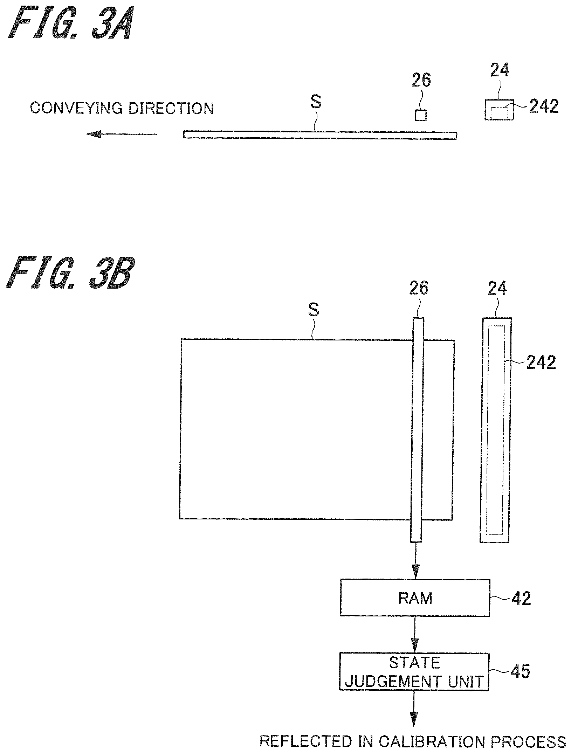

The ink-jet recording apparatus 1 forms (records) an image on the paper by discharging an ink from a nozzle disposed in an ink-jet head 242 (see Figs. 3A and 3B). The ink-jet recording apparatus 1 is a color ink-jet recording apparatus for superposing inks of four colors, that is, yellow (Y), magenta (M), cyan (C), and black (B). The ink-jet recording apparatus 1 is configured to print a test chart, allow an image reader 26 to read an image of the test chart printed on the paper, and judge a state of a printer engine based on the read image. The ink-jet recording apparatus 1 transmits information of the printer engine state for recording the image on the paper (recording material) to the second image processing apparatus 4.

The terminal device 2 is exemplified as an operation terminal, for example, a personal computer. It is also possible to employ a tablet terminal and a smartphone as the terminal device 2. The terminal device 2 is controlled by an OS (Operation System). A document browsing software for displaying the document such as document files and image files on the display screen, and a printer driver for generating a print job are installed in the terminal device 2.

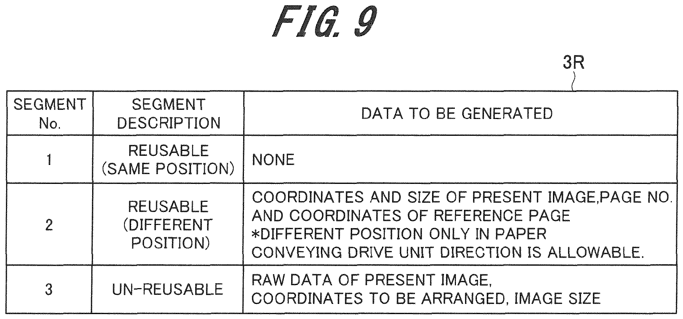

The first image processing apparatus 3 receives print data (1) such as PDL data of the print job from the terminal device 2 and the like, and converts all pages of the print data into RAW data (RIP (Raster Image Processor) process). The term RAW data denotes the RIP processed print data before execution of the calibration process. After completion of converting all pages of the print data into the RAW data, the first image processing apparatus 3 locates a reusable region upon execution of the calibration process to the RAW data. The reusable region locating process serves to classify pixels in the respective pages of the print data into three segments. The three segments of the reusable region will be described in detail later in reference to Fig. 9.

The second image processing apparatus 4 receives the print data (RAW data) which have been RIP processed by the first image processing apparatus 3, and further receives printer engine state information (2) from the ink-jet recording apparatus 1. The second image processing apparatus 4 executes the calibration process to the RAW data based on the printer engine state information and the reusable region location information so that the calibrated RAW data (3) are output to the ink-jet recording apparatus 1. The ink-jet recording apparatus 1 generates a printed matter (4) by recording the image on the paper based on the calibrated RAW data.

Focusing on the importance of reduction in the time for executing the second process which depends on the printer engine state such as the calibration process rather than the time for executing the first process which does not depend on the printer engine state such as the RIP process and the color conversion process, the complementary process has been added to the first process to establish the method for accelerating the second process based on the result of the first process. In other words, in the embodiment, the calibration result is reused by taking the printed position on the paper (image data) as a parameter. Specifically, the image processing apparatus (in this example, the ink-jet recording apparatus 1) configured to reuse the result of the image process for calibration on the other page uses the position information on the image data, and the paper conveying direction information so that the data to be reused is located.

### [Head unit and image reader for ink-jet recording apparatus]

An arrangement example of the head unit 24 and the image reader 26 for the ink-jet recording apparatus 1 will be described.

Figs. 3A and 3B are explanatory views of an arrangement example of the head unit 24 and the image reader 26 for the ink-jet recording apparatus 1. Fig. 3A is a side view and Fig. 3B is a top view.

The ink-jet recording apparatus 1 includes the head unit 24 in which the ink-jet head 242 is installed. The head unit 24 is arranged to face an image forming surface of the paper S. The ink-jet head 242 includes a plurality of nozzles arranged for discharging ink along a direction orthogonal to the paper conveying direction (main scanning direction). The ink-jet head 242 as shown in Fig. 3B with wide width has its length in the main scanning direction longer than that of the paper S. The image reader 26 having light receiving elements (pixels) arranged along the main scanning direction is disposed at the downstream side of the head unit 24 in the paper conveying direction (hereinafter simply referred to as "downstream side").

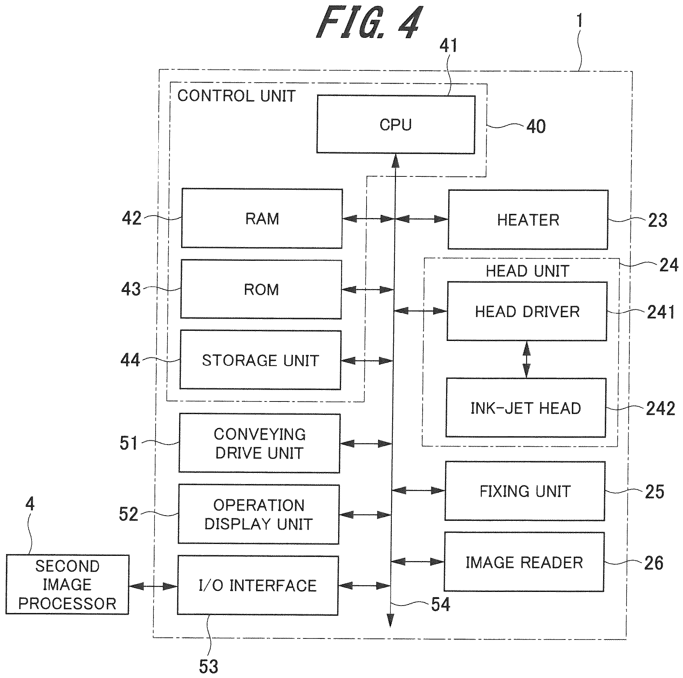

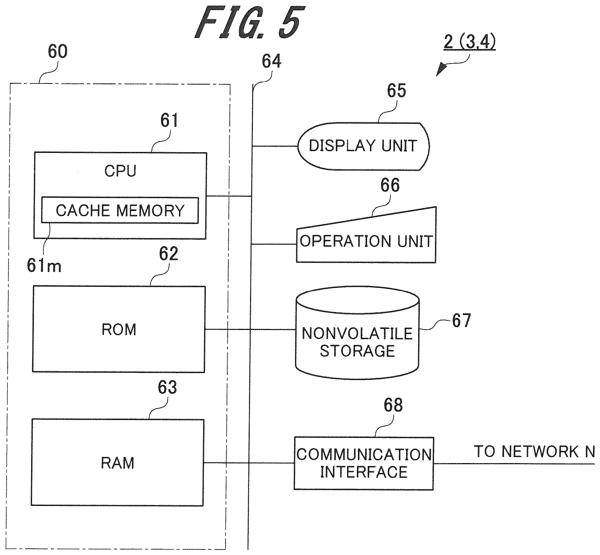

Upon user's instruction to print a test chart to the ink-jet recording apparatus 1 via an operation display unit 52 (see Fig. 4), the head unit 24 constituting the printer engine of the ink-jet recording apparatus 1 forms the test chart on the entire surface of the paper S. The test chart includes a first chart group in yellow, a second chart group in magenta, a third chart group in cyan, and a fourth chart group in black from the upstream side in the conveying direction of the paper S, for example. It is possible to give the instruction to print the test chart by using an operation unit 66 (see Fig. 5) of the terminal device 2.

Then the image reader 26 reads the test chart formed on the paper S, and stores the read image data in a RAM 42. Based on the read image data stored in the RAM 42, a state judgement unit 45 detects a discharge fault of the nozzle (nozzle fault) of the ink-jet head 242. The state information of the head unit 24 as the printer engine is reflected in the calibration process. The state judgement unit 45 is implemented through execution of the program stored in a ROM 43 by a CPU 41 of the control unit 40 as shown in Fig. 4 to be described later.

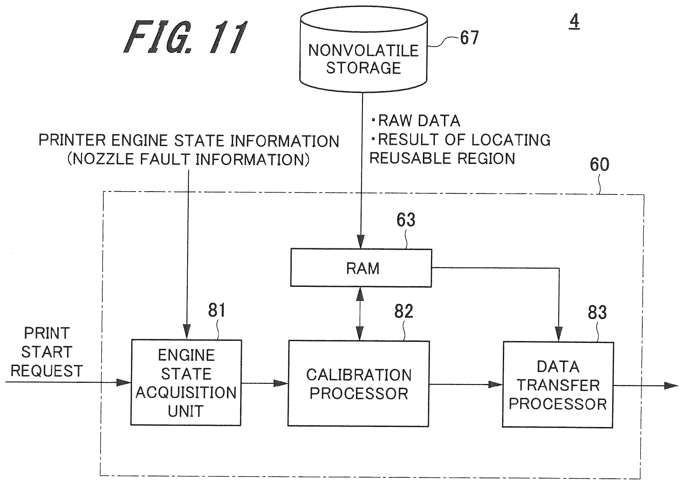

Specifically, in the case that the state judgement unit 45 detects the discharge fault, a calibration processor 82 of the second image processing apparatus 4 to be described later as shown in Fig. 11 executes correction to the head unit 24 by increasing a discharge amount of the ink from the nozzle adjacent to the nozzle with discharge fault. For example, as the discharge fault of the certain nozzle may cause the white streak along the paper conveying direction, the correction process is executed by increasing each discharge amount of the nozzles at both sides of the nozzle with discharge fault in the main scanning direction. The state judgement unit 45 may be configured to display the information relating to the discharge fault on the operation display unit 52, for example, the information relating to the nozzle, the ink-jet head 242, and the head unit 24 in which the discharge fault has occurred.

As described above, the test chart is formed on the whole surface of the single paper S so as to accurately detect the nozzle position at which the discharge fault has occurred, and the discharge fault degree (size of the white streak or the like). This makes it possible to improve accuracy of the correction process.

The ink-jet recording apparatus 1 may include a cylindrical image forming drum to be rotated by a not shown drive motor. The paper S fed from a paper feed unit is supported on an outer circumferential surface of the image forming drum. Then the image forming drum conveys the paper S toward a paper discharge unit through a rotary driving operation. A heater 23, the head unit 24, a fixing unit 25, and the image reader 26 are arranged while facing the outer circumferential surface of the image forming drum.

The nozzle fault (may also be referred to as nozzle missing) is exemplified as the discharge fault in a non-restricted manner. The discharge fault may occur in the situations such as discharge bending owing to the landing position of the ink deviating from the ideal position, and discharge delay or the discharge timing delay as a result of failure to normally transfer the electric signal to the ink-jet head 242 and failure of the nozzle of the ink-jet head 242 to react to the control signal as expected. The discharge fault may include multiple phenomena in which the ink cannot be normally discharged as described above.

### Control system for ink-jet recording apparatus

The structure of the control system for the ink-jet recording apparatus 1 will be described referring to Fig. 4. Fig. 4 is a block diagram showing a structure example of the control system for the ink-jet recording apparatus 1.

As Fig. 4 shows, the ink-jet recording apparatus 1 includes the control unit 40. The control unit 40 includes the CPU (Central Processing Unit) 41, the RAM (Random Access Memory) 42 used as a work area for the CPU 41, and the ROM (Read Only Memory) 43 for storing the program and the like to be executed by the CPU 41, for example. The control unit 40 further includes a storage unit 44 as a mass storage device such as a hard disk drive (HDD). The storage unit 44 stores image data read by the image reader 26, the test chart for detecting the discharge fault of the nozzle of the ink-jet head 242, and information for detecting the discharge fault of the nozzle.

The ink-jet recording apparatus 1 includes a conveying drive unit 51 for driving the conveying system such as the image forming drum (not shown), a paper ejection unit, and a paper reversing unit, the operation display unit 52, and an I/O interface 53.

The CPU 41 of the control unit 40 is connected to a heater 23, the head unit 24, the fixing unit 25, the image reader 26, the RAM 42, the ROM 43, and the storage unit 44 via a system bus 54 so as to control the ink-jet recording apparatus 1 overall. The CPU 41 is connected to the conveying drive unit 51, the operation display unit 52, and the I/O interface 53 via the system bus 54.

The operation display unit 52 is a touch panel constituted as the display, for example, a liquid crystal display (LCD) or an organic ELD (Electro Luminescence Display). The operation display unit 52 displays an instruction menu for the user, and information relating to the nozzle discharge detection operation, and the information relating to the acquired image data. Furthermore, the operation display unit 52 includes a plurality of keys serving as an input unit for receiving inputs of data such as various instructions, characters, and figures through the user's key operation.

The I/O interface 53 is communicably connected to the second image processing apparatus 4. The I/O interface 53 receives the print job (image data, output setting) from the second image processing apparatus 4. The I/O interface 53 outputs the received image data to the control unit 40. The control unit 40 subjects the image data received from the I/O interface 53 to the image process. The control unit 40 may be configured to execute the image process to the received image data as needed, for example, the shading correction, the image density adjustment, and the image compression.

The head unit 24 receives the image data which have been image processed by the control unit 40 so as to form a predetermined image on the paper P based on the image data. Specifically, the head unit 24 drives a head driver 241 to allow the ink-jet head 242 to discharge the ink to the predetermined position. The heater 23 for heat generation is disposed at the upstream side of the head unit 24 so that the temperature of the paper S passing therearound becomes the predetermined value under the control of the control unit 40.

The four head units 24 are disposed corresponding to colors of yellow (Y), magenta (M), cyan (C), and black (K), respectively. The four head units 24 corresponding to yellow, magenta, cyan, black are arranged sequentially from the upstream side in the direction for conveying the paper S.

The head unit 24 is set to have a length (width) for entirely covering the paper S in the direction orthogonal to the one for conveying the paper S (main scanning direction). In other words, the ink-jet recording apparatus 1 is of line head type as a one-pass system. Each of the four head units 24 has the same structure except the color of the ink to be discharged.

The image formed on the paper S by the head unit 24 is read by the image reader 26. The read image data are transmitted to the control unit 40. Upon detection of the nozzle discharge fault, the control unit 40 identifies the nozzle having the discharge fault based on the image data transmitted from the image reader 26. The control unit 40 executes the correction process to the head unit 24 by increasing the discharge amount of the ink from the nozzle adjacent to the one having the discharge fault.

### Hardware structure of terminal device and image processing apparatus

Fig. 5 is a block diagram indicating a structure example of a hardware for the respective devices of the image forming system 10. The respective components inside the device will be selected in accordance with functions and application purposes of the respective devices. In this case, the structure example of the hardware for the terminal device 2 of the image forming system 10 will be described. Each hardware structure of the first image processing apparatus 3 and the second image processing apparatus 4 is the same as that of the terminal device 2.

The terminal device 2 includes a control unit 60, a display unit 65, an operation unit 66, a nonvolatile storage 67, and a communication interface 68. The respective units of the terminal device 2 are connected with one another via a bus 64.

The control unit 60 includes a CPU 61, a ROM 62, and a RAM 63. The control unit 60 is exemplified as a computer for controlling operations of the respective units in the terminal device 2.

In response to the user's input operation performed through the operation unit 66, for example, the CPU 61 operates the printer driver to generate the print job. The CPU 61 as an example of the control unit is configured to read program codes of the software for implementing the respective functions according to the embodiment from the ROM 62 (as an example of the recording medium) for execution. The CPU 61 includes a cache memory 61m for high-speed data processing, which is appropriately utilized to execute the arithmetic operation. It is possible to employ any other arithmetic operating device such as an MPU (Micro Processing Unit) as the arithmetic operating unit instead of the CPU 61.

The ROM 62 is employed as an exemplary nonvolatile memory, and stores the program and data required for operating the CPU 61.

The RAM 63 is employed as an exemplary volatile memory, and temporarily stores the information (data) required for the CPU 61 to execute the respective processes.

The display unit 65 is a liquid crystal display monitor, for example, and displays results of the process executed by the control unit 60. As the operation unit 66, a keyboard, a mouse, a touch panel or the like may be employed, by which the user performs predetermined operations, and inputs instructions.

The nonvolatile storage 67 is an example of the recording medium, and stores the program by which the CPU 61 controls the respective units, the program such as the OS, and data. For example, the HDD, the SSD (Solid State Drive), the optical disk, the magneto-optical disk, the CD-ROM, the CD-R, the magnetic tape, the nonvolatile memory card may be employed as the nonvolatile storage.

The communication interface 68 includes a NIC (Network Interface Card), a modem and the like, for example, and secures connection to the unit to be communicated via the network N such as LAN so as to execute transmission and reception of various data.

The first image processing apparatus 3 and the second image processing apparatus 4 will be described.

Each hardware structure of the first image processing apparatus 3 and the second image processing apparatus 4 is similar to the one as shown in Fig. 5. Each of the first image processing apparatus 3 and the second image processing apparatus 4 does not have to include the display unit 65 and the operation unit 66.

Upon reception of the print job from the terminal device 2, the CPU 61 for the first image processing apparatus 3 locates the region of the calibrated reference page (RAW data), which allows reuse of the calibration result for the page (present page) to be processed. In the embodiment, the reusable regions are classified into three segments in accordance with the reuse mode (see Fig. 9).

Upon reception of the print job (print instruction) from the terminal device 2, the CPU 61 of the second image processing apparatus 4 judges as to reusability of the calibration result for the respective pixel groups based on the state information with respect to the main scanning direction of the printer engine (for example, nozzle fault information), and the reusable region information. In accordance with the judgement result as to reusability, the CPU 61 executes the calibration process to the present page while appropriately reusing the result of calibration to the reference page expanded into the RAM 63. The RAM 63 is an example of a temporary storage having the calibrated image data (calibration result) of the reference page expanded upon execution of the calibration process. The calibration process executed by the second image processing apparatus 4 will be described later in detail.

### Function structure of control unit for first image processing apparatus

The function structure of the control unit 60 for the first image processing apparatus 3 will be described.

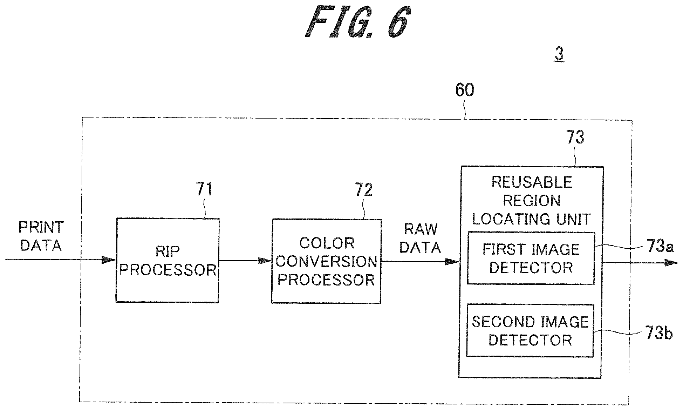

Fig. 6 is a block diagram showing a function structure example of the control unit 60 for the first image processing apparatus 3.

The control unit 60 for the first image processing apparatus 3 includes a RIP processor 71, a color conversion processor 72, and a reusable region locating unit 73. The control unit 60 for the first image processing apparatus 3 reads the print data and the output setting from the print job received from the terminal device 2 through the communication interface 68. The print data may be files generated in PDL (Page Description Language) such as PostscRIPt (registered trademark) and PDF (Portable Document Format). The first image processing apparatus 3 exemplifies a first image detector and a second image detector.

The RIP processor 71 executes the process for rasterizing (RIP process) the print data for each page ((1) shown in Fig. 2) based on the output setting of the received print job so that the processed data are output to the color conversion processor 72. Upon execution of the RIP process, the RIP processor 71 determines the part of the print data, in which character data are embedded as a character region, and further determines the part of the print data, in which photographic data are embedded as a photographic region. The RIP processor 71 outputs a tag bit plane in accordance with an object type (character object or photographic object) for each region contained in the print data in addition to the RAW data (hereinafter referred to as CMYK plane) which have been generated based on the print data. The RAW data are image forming data readable by the ink-jet recording apparatus 1. Upon printing performed by the ink-jet recording apparatus 1, based on the tag bit given to each pixel contained in the tag bit plane, the appropriate image process (change in the tone curve type, and thinning process) is executed to the CMYK planes so as to improve print quality.

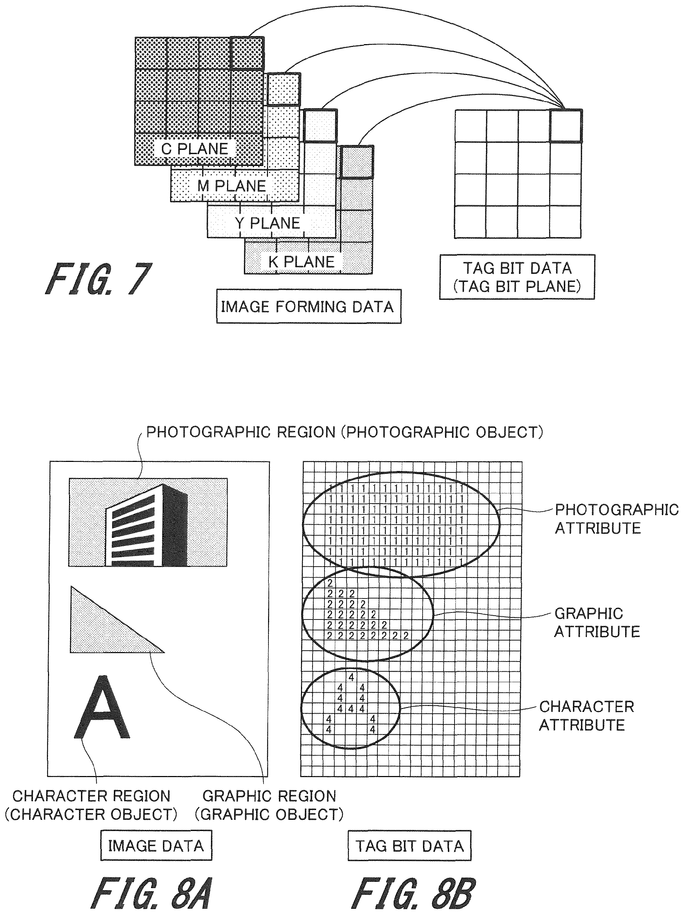

The CMYK planes and the tag bit planes (tag bit data) will be described referring to Figs. 7 and 8A and 8B.

Fig. 7 is a conceptual view of an example of the tag bit data.

The term "tag bit data" refers to the data indicating the attribute information for each pixel of the RAW data (bit map data) generated by the ink-jet recording apparatus 1 which executes the RIP process to the print data. The printer controller generates the tag bit data including one tag bit plane with respect to color data which contain four planes of CMYK. The pixel at the specific position of each of the CMYK planes coincides with the pixel at the specific position of the tag bit plane.

Figs. 8A and 8B are conceptual views showing a relationship between the image data and the tag bit data.

Fig. 8A shows an example of the image data. The image data are input to the first image processing apparatus 3 as print data. The image data contain the photographic region having the photographic data embedded, a graphic region having graphic data embedded, and the character region having the character data such as fonts embedded. The respective regions contained in the image data (corresponding to the pixel groups) are identified as a character object, a graphic object, and a photographic object, respectively.

Fig. 8B shows the tag bit data corresponding to the image data shown in Fig. 8A. The tag bit data are constituted by tag bits allocated in accordance with object attributes (photograph/graphic/character) of the respective pixels constituting the image data. For example, the tag bit indicating the photographic attribute designated as "1", the tag bit indicating the graphic attribute designated as "2", and the character image tag bit indicating the character attribute designated as "4" are allocated to the photographic object, the graphic object, and the character object, respectively. In the explanation to be described below, it is assumed that the character image tag bit is allocated to the graphic object. However, it is possible to allocate the photographic tag bit to the graphic object.

It is therefore necessary to satisfy two conditions so that the two pixel groups are regarded as being the same. The first condition is that the object type is the same, and the second condition is that the pixel values at the coordinates corresponding to the respective CMYK planes are the same. In the above-described example, four color planes of CMYK are generated. However, more color planes such as CMYKOGV may be generated.

The color conversion processor 72 executes the process for color converting the print data RIP processed by the RIP processor 71 for each page using a color conversion table based on the ICC profile, for example. The color conversion processor 72 converts the CMYK values of the RIP processed print data into the other CMYK values required by the user using the color conversion table. The color conversion processor 72 temporarily stores the converted RAW data of all pages in the nonvolatile storage 67 for the first image processing apparatus 3.

The reusable region locating unit 73 executes the process for locating the region where the result of calibration is reusable for the page to be processed (present page) from the calibrated reference page (RAW data). The reusable region locating unit 73 classifies the pixels in the present page into three segments to generate data (information) in accordance with the respective segments. As understood from Figs. 8A and 8B, the segment is not the single pixel unit, but the pixel group with a certain size including multiple pixels. For example, the pixel group may be a rectangular shaped 32x32 pixel assembly including an object of certain type. It is to be understood that the shape of the pixel group is not limited to the rectangular shape. The reusable region locating unit 73 compares the pixel values in units of a pixel group for making a determination on the basis of whether all the pixels contained in the pixel group to be compared are the same. The reusable region locating unit 73 includes a first image detector 73a and a second image detector 73b.

The first image detector 73a compares the reference page (example of first image data for reference) with the present page (example of second image data to be processed) so as to detect a pixel group (first pixel group) having the same coordinates and the same constituting pixels as those of the pixel group of the reference page from the present page. The reusable region locating unit 73 classifies the first pixel group detected by the first image detector 73a into "segment 1" as shown in Fig. 9. In other words, the pixel group in the present page classified as the "segment 1" is determined to have the same content as that of the reference page as a result of comparison of the pixel groups between the reference page and the present page at the same coordinates (position). The coincidence of the position between the pixel groups may be judged through comparison with the pixel corresponding to the center of gravity, or the specific pixel (for example, the upper left corner of the rectangular pixel).

The second image detector 73b compares the reference page with the present page so as to detect a pixel group (second pixel group) having the same coordinate in the main scanning direction orthogonal to the paper conveying direction, and the same constituting pixels as those of the pixel group of the reference page, but a different coordinate in the paper conveying direction. The reusable region locating unit 73 classifies the second pixel group detected by the first image detector 73a into "segment 2". In other words, the "segment 2" allows the pixel groups of the reference page and the present page to be differently positioned only in the paper conveying direction (the same image contents) for the reason as described below. One of the reasons is the focus on the characteristic that the nozzle fault correction as the calibrating process executed by the ink-jet recording apparatus 1 is equally performed on the same axis in the paper conveying direction.

The reusable region locating unit 73 classifies the pixel group which does not fall under the first or the second pixel group into "segment 3". The information (result of locating reusable region) of pixel groups in those segments 1 to 3 will be temporarily stored in the RAM 63, and used for the calibration process executed by the second image processing apparatus 4 as the reusable region information 3R.

### Example of reusable region segment

An example of reusable region segment will be described referring to Fig. 9.

Fig. 9 is an explanatory view showing an example of reusable region segment.

The reusable region information 3R includes "Segment No.", "Segment description", and "Data to be generated". The reusable region information 3R is databased for each page, and temporarily stored in the RAM 63.

The "Segment No." denotes the number for identifying the segment type. Fig. 9 shows the "Segment 1", "Segment 2", and "Segment 3".

The "Segment description" denotes the title corresponding to the "Segment No.". Fig. 9 shows "Reusable (same position)" corresponding to the segment 1, "Reusable (different position)" corresponding to the segment 2, and "Un-reusable" corresponding to the segment 3.

The "Reusable (same position)" represents that the pixel groups of the reference page and the present page, each having the same pixel value constituting the pixel group are at the same position (coordinates), indicating reusability.

The "Reusable (different position)" represents that the pixel groups of the reference page and the present page, each having the same pixel value constituting the pixel group are at the same position (coordinate) in the main scanning direction orthogonal to the paper conveying direction, while having a different coordinate in the paper conveying direction, indicating reusability.

The "Un-reusable" represents that each of the pixel groups has the different pixel value, indicating un-reusability.

The "Data to be generated" represents the data (information) to be generated in response to detection of the pixel group corresponding to each of the segments.
Segment 1 : No data to be generated
Segment 2 : Coordinates and size of the present image (pixel group), Page number and coordinates of the reference image (pixel group)
Segment 3 : RAW data of the present image (pixel group), Coordinates to be arranged, Size of the present image (pixel group)

After completion of locating the reusable region for all pages, the reusable region locating unit 73 transmits the RAW data and results of the reusable region location (see (2) of Fig. 2) to the second image processing apparatus 4 via the communication interface 68. The second image processing apparatus 4 stores those received data in the nonvolatile storage 67.

### [Example of reusable region image]

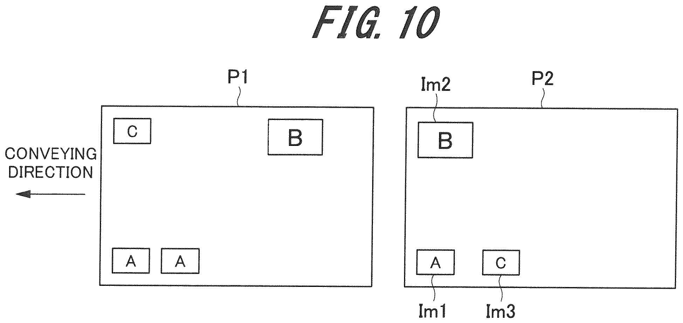

Fig. 10 is an explanatory view showing a reusable region locating process.

The drawing shows an example of the page P1 of the print job as the reference page, and the page P2 which is conveyed after the page P1 as the page to be processed (present page). In comparison between the pages P1 and P2, the page P2 has a pixel group Im1 with the same content (image A) as that of the pixel group of the page P1 at the same position as well. The pixel group Im1 of the page P2 is classified into the "segment 1". The page P2 also has a pixel group Im2 with the same content (B) as that of the pixel group of the page P1, which is positioned on the same axis in the paper conveying direction. The image group Im2 of the page P2 is classified into the "segment 2". The page P2 also has a pixel group Im3 constituting an image C. The page P1 does not have the pixel group of the image C at the position corresponding to the one on the page P2, or at the position on the same axis in the paper conveying direction. Accordingly, the pixel group Im3 is classified into the "segment 3".

### [Function structure of control unit for second image processing apparatus]

The function structure of the control unit 60 for the second image processing apparatus 4 will be described.

Fig. 11 is a block diagram showing a function structure example of the control unit 60 for the second image processing apparatus 4.

The control unit 60 for the second image processing apparatus 4 includes an engine state acquisition unit 81, a calibration processor 82, and a data transfer processor 83. Upon reception of a print start request from the operation display unit 52 or the terminal device 2, the control unit 60 for the second image processing apparatus 4 starts executing the calibration process to the RAW data. The second image processing apparatus 4 exemplifies the image processor.

The engine state acquisition unit 81 acquires the state information relating to the main scanning direction of the printer engine of the ink-jet recording apparatus 1 (hereinafter referred to as "engine state information") to output the information to the calibration processor 82. In this embodiment, the engine state information represents the fault position of the nozzle of the ink-jet head 242 for the ink-jet recording apparatus 1 in the main scanning direction (nozzle fault information). The engine state acquisition information 81 may be configured to acquire the engine state information from the ink-jet recording apparatus 1 upon reception of the print start request, or may be configured to acquire the engine state information at a predetermined time interval so that the latest information is stored in the nonvolatile storage 67.

Based on the state information relating to the main scanning direction of the printer engine, and the reusable region information 3R, the calibration processor 82 generates the calibrated RAW data (image correction process) from the page to be processed to store the data in the RAM 63. The RAM 63 may be formed as, for example, SDRAM. The calibration processor 82 may exemplify the image processor in a narrow sense.

The data transfer processor 83 exhibits a DMA (Direct Memory Access) transfer function to transfer the calibrated RAW data to the ink-jet recording apparatus 1 (printer engine) as needed.

The calibration processor 82 of the above-structured control unit 60 starts reading the RAW data on the top page from the nonvolatile storage 67 at low access speeds, and executes the image process for calibration to the RAW data based on the engine state information (nozzle fault information and the like). The calibration processor 82 executes the image process for calibration to the RAW data so that the calibrated RAW data are expanded into the storage region of the RAM 63 at high access speeds. Based on an instruction of the calibration processor 82, the data transfer processor 83 transfers the RAW data (see (3) of Fig. 2) after finishing the calibration process to the top page from the RAM 63 to the ink-jet recording apparatus 1 (printer engine) through a DMA (Direct Memory Access) transfer process without using the CPU 61.

The ink-jet recording apparatus 1 (printer engine) converts the calibrated RAW data into the drive information of the ink-jet head 242 so as to discharge the ink from the nozzle for printing on the paper, and generate printed matters (see (4) of Fig. 2).

In the case of the multiple-page print job, the image process for calibration to the second and subsequent pages is executed by overwriting the data in the RAM 63 with the calibrated RAW data without discarding.

Specifically, if the pixel group of the present page to be processed is classified into the segment 1, and determined as being "reusable (the same position)", the calibrated RAW data of the corresponding pixel group at the same coordinates in the previous page is reused while being kept unprocessed.

If the pixel group to be processed is classified into the segment 2, and determined as being "reusable (different position)", the calibrated RAW data at the reference coordinate in the previous page (that is, the coordinate on the same axis in the paper conveying direction) are copied and reused.

If the pixel group to be processed is classified into the segment 3, and determined as being "un-reusable", the image process for calibration is newly executed to the RAW data of the subject pixel group so as to update the calibrated RAW data in the RAM 63.

### [First process executed by first image processing apparatus]

The first process executed by the first image processing apparatus 3 will be described.

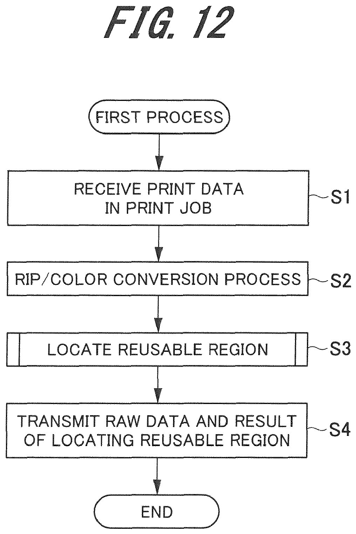

Fig. 12 is a flowchart representing a procedure example of the first process executed by the first image processing apparatus 3. Fig. 12 shows the process flow in the operation of the first image processing apparatus 3 from reception of the print data for outputting to transfer of the data to the second image processing apparatus 4.

Firstly, the control unit 60 for the first image processing apparatus 3 receives the print job (print data, output setting) from the terminal device 2 through the communication interface 68 (S1).

Based on the output setting, the RIP processor 71 of the control unit 60 executes the RIP process to the print data. Based on the output setting, the color conversion processor 72 executes the color conversion process to the RIP processed print data. Through the above-described processes, the print data are converted into the RAW data (S2).

The reusable region locating unit 73 of the control unit 60 locates the region where the result of the calibration process to the reference page is reusable for the page to be processed (present page) (S3). The reusable region locating unit 73 transmits the RAW data and the result of reusable region location to the second image processing apparatus 4 via the communication interface 68 (S4).

### [Reusable region locating process]

The reusable region locating process executed in step S3 as shown in Fig. 12 will be described.

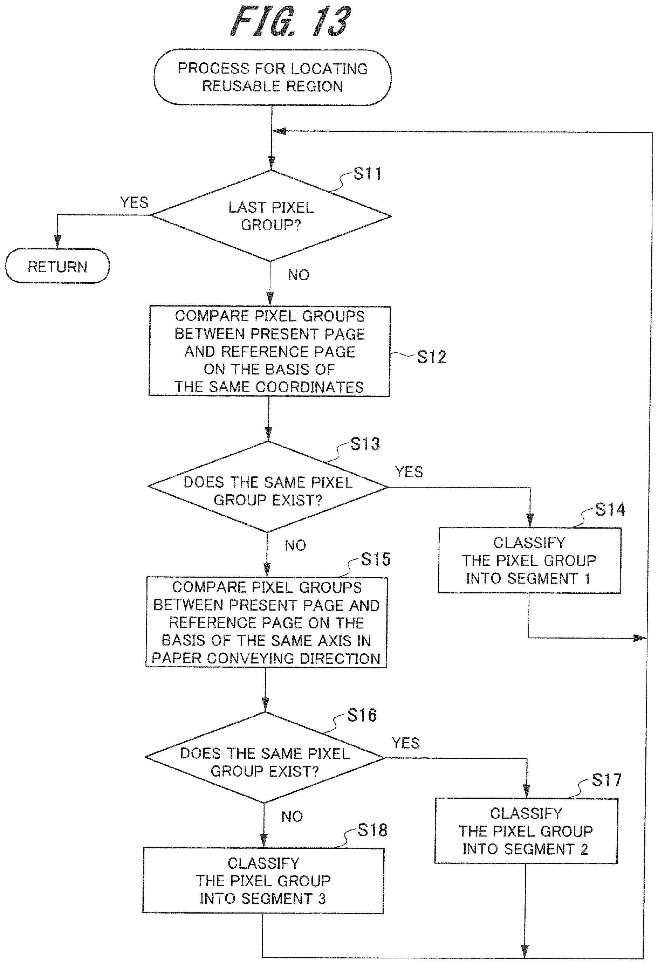

Fig. 13 is a flowchart representing a procedure example of the reusable region locating process executed in step S3. The reusable region locating process is executed for each tag bit plane of the RAW data in the respective colors.

Firstly, the reusable region locating unit 73 confirms whether or not the pixel group to be processed in the present page is the last one, that is, whether or not classification of all the pixel groups in the present page into the respective segments has been finished (S11). If there is the pixel group which has not been classified into the segment (NO in S11), the process proceeds to step S12 to be executed for the next pixel group. In this stage, as the subject pixel group is the first one among the multiple pixel groups in the present page, the classification of all the pixel groups has not been completed yet.

The reusable region locating unit 73 allows the first image detector 73a to compare the pixel group in the present page with the pixel group in the reference page at the same coordinates (S12). The first image detector 73a judges whether or not the pixel group to be processed in the present page has the same coordinates and the same constituting pixels as those of the reference page (S13). If the pixel group to be processed in the present page has the same pixel group as that of the reference page (the position and the content are the same) (YES in S13), the first image detector 73a classifies the subject pixel group in the present page into the segment 1 (S14), and the process proceeds to step S11.

Meanwhile, if the pixel group in the present page is not the same as the pixel group in the reference page (NO in S13), the reusable region locating unit 73 allows the second image detector 73b to compare the pixel group in the present page with the pixel group in the reference page with respect to the axis in the paper conveying direction (S15).

The second image detector 73b judges whether or not the subject pixel group in the present page has the same constituting pixels as those in the reference page on the same axis in the paper conveying direction (S16). If the subject pixel group in the present page has the same constituting pixels as those in the reference page on the same axis in the paper conveying direction (YES in S16), the second image detector 73b classifies the subject pixel group in the present page into the segment 2 (S17). At this time, the coordinate information indicating the position of the pixel group in the reference page, corresponding to the subject pixel group in the present page is stored together with the classification result. At the end of the process executed in step S17, the second image detector 73b allows the process to proceed to step S11.

If the reference page has no pixel group which is the same as the subject pixel group in the present page on the same axis in the paper conveying direction (NO in S16), the reusable region locating unit 73 classifies the pixel group into the segment 3 as it does not fall under the segment 1 or 2 (S18), and the process proceeds to step S11. As described above, the reusable region locating unit 73 appropriately executes the process in steps S11 to S18 to the multiple pixel groups in the present page sequentially. If the segmentation of all the pixel groups in the present page has been completed (YES in S11), the reusable region locating unit 73 returns the process to step S4 as shown in Fig. 12.

At the end of reusable region locating process executed by the above-described first image processing apparatus 3, the RAW data and the result of reusable region locating are transmitted from the first image processing apparatus 3 to the second image processing apparatus 4. It is preferable to execute the first process including conversion into the RAW data and the reusable region locating before reception of the print instruction for the purpose of reducing the time period taken from reception of the print instruction to completion of the print job.

### Second process executed by second image processing apparatus

The second process to be executed by the second image processing apparatus 4 will be described.

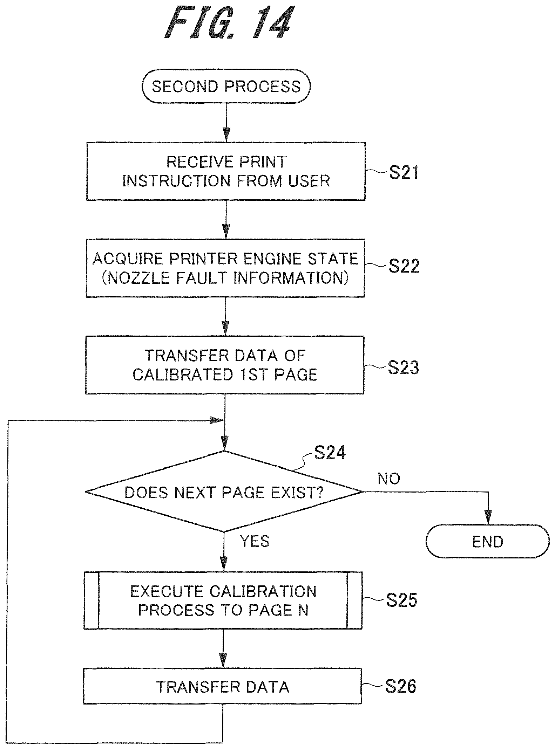

Fig. 14 is a flowchart representing a procedure example of the second process executed by the second image processing apparatus 4. Fig. 14 shows the process flow in the operation of the second image processing apparatus 4 from reception of the RAW data and the reusable region locating result to execution of the process for calibration to the RAW data so as to be transferred to the ink-jet recording apparatus 1.

Firstly, the control unit 60 for the second image processing apparatus 4 receives the print instruction from the operation display unit 52 of the ink-jet recording apparatus 1 or the terminal device 2 through the user's operation (S21).

The engine state acquisition unit 81 of the control unit 60 acquires the information relating to the state of the printer engine including the head unit 24 (nozzle fault information and the like) from the ink-jet recording apparatus 1 (S22). It is also possible to preliminarily acquire the printer engine state information from the ink-jet recording apparatus 1 so as to be stored in the RAM 63.

The calibration processor 82 executes the calibration process to the first page of the RAW data. The data transfer processor 83 transfers the calibrated RAW data to the ink-jet recording apparatus 1 (printer engine) (S23).

The calibration processor 82 confirms whether or not the next page to be printed exists (S24). If the next page does not exist (NO in S24), the process in the flowchart ends. Meanwhile, if the next page exists (YES in S24), the calibration processor 82 executes the calibration process to the next page (Nth page) (S25). In this case, the calibration process is executed to the second page.

At the end of the calibration process to the Nth page (second page) to be processed, the data transfer processor 83 transfers the calibrated RAW data to the ink-jet recording apparatus 1 (S26). At the end of the process in step S26, the control unit 60 allows the process to proceed to step S24. If there is the page subsequent to the (N+1)th (third) page (YES in S24), process steps from S24 to S26 are repeatedly executed.

### [Calibration process to the Nth page]

The calibration process to the Nth page in step S25 as shown in Fig. 14 will be described.

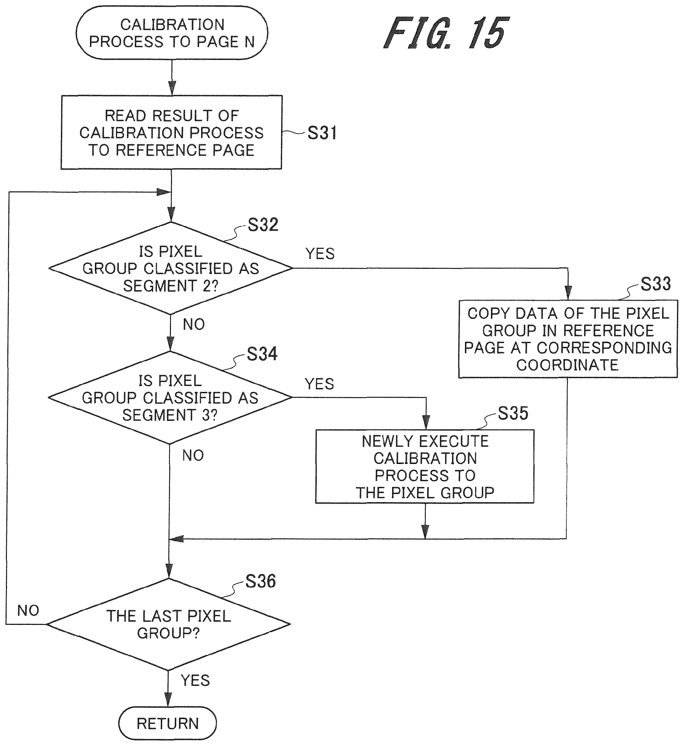

Fig. 15 is a flowchart representing a procedure example of the calibration process to the Nth page in step S25.

Firstly, the calibration processor 82 loads the result of the calibration process to the Nth page of the RAW data in the reference page (calibrated RAW data) into the RAM 63 from the nonvolatile storage 67 (Fig. 5) (S31).

In reference to the result of locating the reusable region, the calibration processor 82 judges whether or not the pixel group to be processed in the Nth page is classified into the "segment 2" (S32). If the subject pixel group is classified into the "segment 2" (YES in S32), based on the coordinate information stored as the reusable region location result, the calibration processor 82 copies data of the pixel group of the reference page at the coordinates corresponding to the subject pixel group. The calibration processor 82 updates data of the subject pixel group of the calibrated RAW data in the reference page stored in the RAM 63 using the copied data (S33). After execution of the process in step S33, the calibration processor 82 allows the process to proceed to step S36.

If the pixel group to be processed is classified into the segment other than the "segment 2" (NO in S32), the calibration processor 82 judges whether or not the pixel group to be processed has been classified into the "segment 3" in reference to the result of locating the reusable region (S34). If the pixel group to be processed is classified into the "segment 3" (YES in S34), the calibration processor 82 newly executes the calibration process to the pixel group based on the printer engine state information. Using the calibration process result, the calibration processor 82 updates the data of the pixel group of the calibrated RAW data in the reference page stored in the RAM 63 (S35). After execution of the process in step S35, the calibration processor 82 allows the process to proceed to step S36.

If the pixel group to be processed is not classified into the "segment 3" (NO in S34), the calibration processor 82 determines that the pixel group to be processed is classified into the "segment 1". As the pixel group classified into the segment 1, the calibrated RAW data in the reference page stored in the RAM 63 may be used as they are.

In the case that execution of the process in step S33 or S35 is finished, or NO is obtained in step S34, the calibration processor 82 confirms whether the calibration process to all the pixel groups in the present page has been completed (S36). If there is the pixel group to which the calibration process has not been executed in the present page (NO in S36), the calibration processor 82 allows the process to proceed to step S32 so that the next pixel group is processed in steps S32 to S36.

In the case that the calibration process to all the pixel groups in the present page has been completed (YES in S36), the process returns to step S26 as shown in Fig. 14 so that the calibrated data in the present page are transferred to the ink-jet recording apparatus 1.

As described above, in the calibration process to the present page, the calibration processor 82 expands the calibrated image data in the reference page into the RAM 63. Reusing the result of the image process for correction to the pixel image in the reference page on the same axis in the paper conveying direction, the region of the pixel group in the present page, which has been classified into the segment 2 is overwritten and updated with the region of the calibrated image data in the reference page expanded into the RAM 63. The calibration process is newly executed to the region of the pixel group classified into the segment 3 in the present page to update the region of the calibrated image data in the reference page. After the end of updating the regions of the pixel groups each classified into the segment 2 and the segment 3, respectively, the RAW data expanded into the RAM 63 are transferred to the printer engine as the calibrated RAW data in the present page.

According to the first embodiment as described above, based on the reusable region location information relating to the present page, the result of calibration process to the reference page (first image data for reference) is reused for executing the calibration process to the present page (second image data to be processed). It is therefore possible to lessen the newly executed calibration process, ensuring to reduce the time period needed for the calibration process (second process). Accordingly, the speed for executing the calibration process to the present page is accelerated to secure improved real-time property upon printing of the job for multiple pages.

In the first embodiment as described above, the page just before the present page is the reference page. Each of the present page and the reference page may be those printed by the different print job. For example, in the case of the print job for printing multiple sets of the single page, each page will be printed in the different print job. In such a case, the image process for calibration is appropriately executed while securing the reference page. This makes it possible to maintain the print quality.

In the first embodiment as described above, the reference page and the present page to be compared with each other may be on the same print page. For example, it is possible to reuse the result of the calibration process to the pixel group with the same content on the same axis in the paper conveying direction in the same page for the pixel groups classified into the segment 1 and the segment 2, respectively in the page. The result of the calibration process on the same page as the present page is reusable so as to reduce the storage capacity of the RAM 63.

### Second Embodiment

A second embodiment is configured to use the cache memory 61m to reduce the storage region used by the RAM 63.

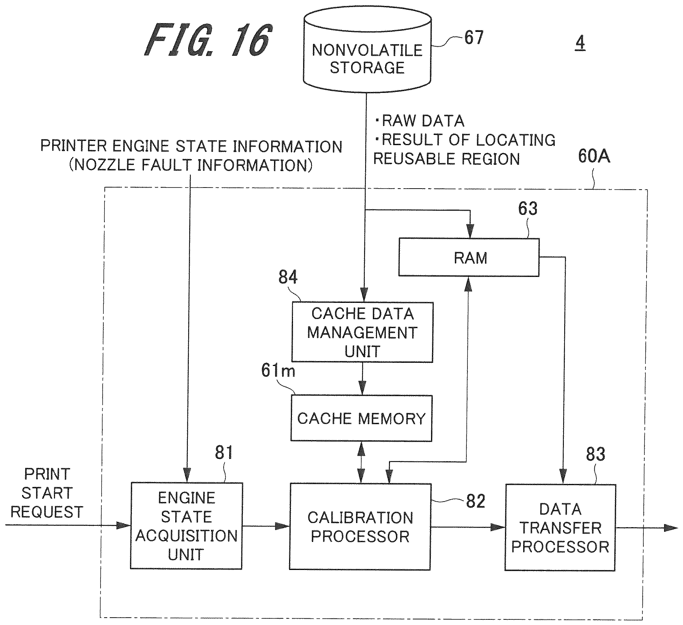

Fig. 16 is a block diagram showing a function structure example of a control unit 60A for the second image processing apparatus 4 according to the second embodiment.

The control unit 60A includes the engine state acquisition unit 81, the calibration processor 82, the data transfer processor 83, and a cache data management unit 84.

The cache data management unit 84 manages cache data stored in the cache memory 61m. The cache data management unit 84 stores only the result of the calibration process to the reference page for reuse, corresponding to the pixel group in the present page classified into the segment 2 in the cache memory 61m as the cache data.

The second embodiment as described above makes it possible to reduce the storage region used by the RAM 63.

### Third Embodiment

A third embodiment describes an example that the reusable region locating unit 73 finishes locating the reusable region upon satisfaction of a predetermined condition.

It is assumed that the RAM 63 of the first image processing apparatus 3 stores the information relating to the print speed of the ink-jet recording apparatus 1 (printer engine), and the information relating to the time period needed for the second image processing apparatus 4 to execute the calibration process.

If it is detected that the percentage of the pixel groups classified into the segments 1 and 2 to the present page is equal to or higher than the predetermined threshold value (for example, 80%), the reusable region locating unit 73 finishes detecting the pixel groups classified into the segments 1 and 2. The threshold value is defined by the balance between the printing speed of the printer engine and the time period needed for the calibration process. Specifically, the threshold value may be set so as to allow execution of the real-time printing process even if the calibration process is newly executed to the remaining (20%) pixel groups.

In the third embodiment as described above, the locating process will be finished on the way in spite of the remaining pixel groups having the reusable regions kept un-located in the present page. It is therefore possible to reduce the time period taken for completion of detecting the pixel group in the present page.

### Fourth Embodiment

As Figs. 3A and 3B show, the ink-jet head 242 with wide width has its length in the main scanning direction longer than that of the paper S. This embodiment will describe an example that the ink-jet head has its length in the main scanning direction shorter than that of the paper S.

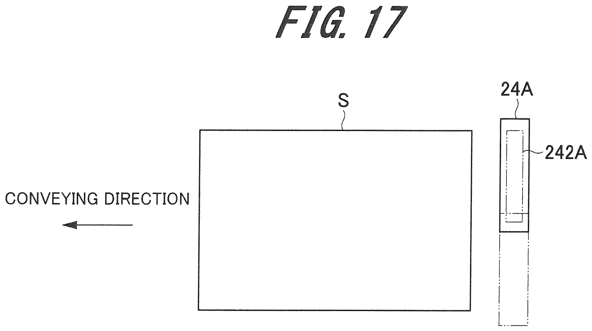

Fig. 17 is a top view showing an example of a head unit 24A according to a fourth embodiment.

The ink-jet head 242 of the head unit 24A has its length in the main scanning direction approximately half the length of the paper S. The ink-jet head 242 serves to discharge the ink uniformly to the whole surface of the paper S in the main scanning direction by moving the head unit 24A in the main scanning direction at a predetermined timing. Even if the ink-jet head 242 has its length in the main scanning direction is approximately 1/3 of the length of the paper S, the ink may be discharged to substantially the whole surface of the paper S in the main scanning direction by moving the head unit 24A three times separately.

### 5. Modified Example

The respective embodiments as described above have exemplified that the nozzle fault correction process (interpolating process) based on the nozzle fault information as the state information relating to the main scanning direction of the printer engine (engine state information) in a non-restricted manner. It is possible to execute the calibration process (correction process) in reference to the vertical streak (white streak or black streak) generated by the image forming apparatus of electrographic type along the paper conveying direction as the engine state information. In other words, not only the ink-jet recording apparatus 1 but also the image forming apparatus of any other type such as the image forming apparatus of electrophotographic type may be the printer engine to which the present invention is applied.

The nozzle fault information has been described as an example of the printer engine state information. Even in the case that the discharge amount of the ink from the nozzle is larger than the set value (corresponding to the black streak), the above-described embodiment allows reuse of the result of the calibration process to the reference page.

The respective functions of the first image processing apparatus 3 and the second image processing apparatus 4 may be installed in the same image processing apparatus. It is also possible to install the respective functions of the first image processing apparatus 3 and the second image processing apparatus 4 in the ink-jet recording apparatus 1. It is further possible to install the respective functions of the first image processing apparatus 3 and the second image processing apparatus 4 in multiple apparatuses dispersedly.

In the respective embodiments as described above, it is possible to change the interval between the reference page and the present page which are compared by the reusable region locating unit 73 in accordance with the storage capacity of the RAM 63 (an example of the memory) used by the second image processing apparatus 4. If the storage capacity of the RAM 63 of the second image processing apparatus 4 is large, results of the calibration process to multiple pages may be stored. Therefore, it is possible to increase the interval between the reference page and the present page by 2, 3, or more pages. In the case that each content of the respective pages of the print data is similar to one another, and the engine state information hardly changes, the result of the calibration process to the first page is acquired as the reference page so as to be used for subsequent multiple pages. This makes it possible to reduce the load to the CPU 61, and further reduce the time period needed to execute the calibration process.

In the respective embodiments as described above, in the case that the calibration processor 82 receives the instruction to execute the image process for calibration from the printer engine during the operation of the print job, the image process for calibration is newly executed to all regions of the subsequent image data irrespective of results of detection performed by the first image detector 73a and the second image detector 73b. For example, if a large number of papers are printed in the print job, the printer engine of the ink-jet recording apparatus 1 is configured to execute the image process for calibration at each completion of printing a preliminarily set number of papers (for example, 5000 sheets of paper). Alternatively, the printer engine executes the image process for calibration in response to the user's instruction to execute the image process for calibration via the operation display unit 52. As described above, the image process for calibration is appropriately executed so as to maintain the print quality in accordance with determination of the engine state.

In the respective embodiments as described above, the use of paper as the recording material is taken as an example. However, the recording material is not limited to the paper as described above. As the recording medium, it is possible to use various kinds of recording materials such as the fabric, the plastic film, and the glass plate.

The present invention is not limited to the respective embodiments as described above. It is to be understood that the present invention may take various forms as applications and modifications so long as they do not deviate from the scope of the present invention described in the appended claims.

The above described embodiments have explained structures of the apparatus and the system in detail for easy understanding of the present invention. Therefore, it is not necessarily limited to those provided with all the components as described above. It is also possible to replace a part of the structure of a specific embodiment with the component of another embodiment. It is further possible to add the component of another embodiment to the structure of the specific embodiment. It is further possible to add, remove, and replace the other component to, from and with a part of the structure of the respective embodiments.

It is possible to implement the respective components, functions, processors, processing means and the like partially or entirely in hardware by designing the integrated circuit, for example. It is also possible to implement the above described respective components, functions and the like in software by the processor that interprets and executes the program for implementing those functions.

### List of Reference Signs

1: ink-jet recording apparatus, 2: terminal device, 3: first image processing apparatus, 3R: reusable region location information, 4: second image processing apparatus, 10: image forming system, 24: head unit, 242: ink-jet head, 26: image reader, 44: storage unit, 45: state judgement unit, 60: control unit, 61: CPU, 61m: cache memory, 71: RIP processor, 72: color conversion processor, 73: reusable region locating unit, 73a: first image detector, 73b: second image detector, 81: engine state acquisition unit, 82: calibration processor, 83: data transfer processor, Iml - Im3: pixel group

## Claims

1. An image processing system for executing an image process for correction to image data contained in a print job, comprising:
a first image detector (3, 73a) which is configured to compare first image data for reference with second image data to be processed, and detects a first pixel group from the second image data, the first pixel group having coordinates and constituting pixels, which are the same as those of a pixel group of the first image data;
a second image detector (3, 73b) which is configured to compare the first image data with the second image data, and detects a second pixel group from the second image data, the second pixel group having a coordinate in a main scanning direction orthogonal to a paper conveying direction, and constituting pixels, which are the same as those of the pixel group of the first image data, but having a coordinate in the paper conveying direction different from a coordinate of the pixel group of the first image data;
a storage unit (67) which is configured to store reusable region information (3R) including information relating to the first pixel group and the second pixel group for each of image data contained in a print job; and
an image processor (4,82) which is configured to execute an image process for correction to the image data to generate corrected image data based on state information relating to the main scanning direction of a printer engine for forming an image on a recording material, and the reusable region information (3R), wherein:
upon generation of the corrected image data from the second image data, the image processor (4,82) reuses a result of image process for correction to the pixel group of the first image data at the same coordinates for a region of the first pixel group of the second image data, reuses a result of image process for correction to the pixel group of the first image data on the same axis in the paper conveying direction for a region of the second pixel group of the second image data, and newly executes the image process for correction to a region of other pixel groups which have not been detected as the first pixel group and the second pixel group of the second image data.

2. The image processing system according to claim 1, further comprising a temporary storage unit (63) operated by the image processor (4,82) for executing the image process for correction,
wherein upon execution of the image process for correction to the second image data, the image processor (4,82) expands the corrected image data of the first image data into the temporary storage unit (63), reuses the result of image process for correction to the pixel group of the first image data on the same axis in the paper conveying direction to overwrite and update a region of the second pixel group of the second image data with the corresponding region of the corrected image data of the first image data, newly executes the image process for correction to the region of the other pixel group of the second image data to update the region of the corrected image data of the first image data, and sets the image data expanded into the temporary storage unit (63) after an end of updating the regions of the second pixel group and the other pixel group to the corrected image data of the second image data.

3. The image processing system according to claim 1 or 2, wherein the state information relating to the main scanning direction of the printer engine represents a fault position in the main scanning direction of a nozzle of an ink-jet head for an ink-jet recording apparatus (1).

4. The image processing system according to claim 1 or 2, wherein the first image data and the second image data which are compared by the first image detector (3, 73a) and the second image detector (3, 73b) correspond to print pages of separate print jobs, respectively.

5. The image processing system according to claim 1 or 2, wherein a page interval between a print page corresponding to the first image data and a print page corresponding to the second image data, which are compared by the first image detector (3, 73a) and the second image detector (3, 73b) is changed in accordance with a storage capacity of a memory used by the image processor (4,82).

6. The image processing system according to claim 1 or 2, wherein a print page corresponding to the first image data and a print page corresponding to the second image data, which are compared by the first image detector (3, 73a) and the second image detector (3, 73b) constitute the same print page.

7. The image processing system according to claim 1 or 2, further comprising:
a second storage unit which is configured to store a result of image process for correction to the first image data;
a storage region (61m) for cache data; and
a cache data management unit (84) which is configured to manage the cache data stored in the storage region,
wherein the cache data management unit (84) stores only the result of image process for correction of the first image data for reuse, corresponding to the second pixel group of the second image data in the storage region (61m) as the cache data.

8. The image processing system according to claim 1 or 2, wherein upon detection that a percentage of the first pixel group and the second pixel group to the second image data is equal to or higher than a threshold value that is defined by a relationship between a printing speed of the printer engine and a time period needed for the image process for correction, the first image detector (3, 73a) and the second image detector (3, 73b) finish detection of the first pixel group and the second pixel group.

9. The image processing system according to claim 1 or 2, wherein upon reception of an instruction to execute the image process for correction from the printer engine during operation of a print job, the image processor (4,82) newly executes the image process for correction to all regions of subsequent image data irrespective of detection results of the first image detector (3, 73a) and the second image detector (3, 73b).

10. The image processing system according to any one of claims 1 to 9, wherein the first image detector (3, 73a), the second image detector (3, 73b), and the image processor (4,82) are installed in one apparatus.

11. The image processing system according to any one of claims 1 to 9, wherein the first image detector (3, 73a), the second image detector (3, 73b), and the image processor (4,82) are dispersedly installed in a plurality of apparatuses.

12. An image processing apparatus (2, 3, 4) for executing an image process for correction to image data contained in a print job, comprising:
a storage unit (67) which is configured to store reusable region information (3R) for each of image data contained in the print job, the reusable region information including first pixel group information and second pixel group information, the first pixel group information being detected from second image data to be processed by a first image detector (73a), which are compared with first image data for reference, and having coordinates and constituting pixels, which are the same as those of a pixel group of the first image data, and the second pixel group information being detected from the second image data compared with the first image data by a second image detector (73b), and having a coordinate in a main scanning direction orthogonal to a paper conveying direction, and constituting pixels, which are the same as those of the pixel group of the first image data, but having a coordinate in the paper conveying direction different from a coordinate of the pixel group of the first image data; and
an image processor (82) which is configured to execute an image process for correction to the image data to generate corrected image data based on state information relating to the main scanning direction of a printer engine for forming an image on a recording material, and the reusable region information (3R),
wherein upon generation of the corrected image data from the second image data, the image processor (82) is configured to reuse a result of image process for correction to the pixel group of the first image data at the same coordinates for a region of the first pixel group of the second image data, reuse a result of image process for correction to the pixel group of the first image data on the same axis in the paper conveying direction for a region of the second pixel group of the second image data, and newly execute the image process for correction to a region of other pixel groups which have not been detected as the first pixel group and as the second pixel group of the second image data.

13. An image processing method for an image processing system configured to execute an image process for correction to image data contained in a print job, the method comprising:
a first image detection process which compares first image data for reference with second image data to be processed, and detects a first pixel group from the second image data, the first pixel group having coordinates and constituting pixels, which are the same as those of a pixel group of the first image data;
a second image detection process which compares the first image data with the second image data, and detects a second pixel group from the second image data, the second pixel group having a coordinate in a main scanning direction orthogonal to a paper conveying direction, and constituting pixels, which are the same as those of the pixel group of the first image data, but having a coordinate in the paper conveying direction different from a coordinate of the pixel group of the first image data;
a storage process which stores reusable region information (3R) including information relating to the first pixel group and the second pixel group in a storage unit (67) for each of image data contained in a print job; and
an image correction process which executes an image process for correction to the image data to generate corrected image data based on the state information relating to the main scanning direction of a printer engine for forming an image on a recording material, and the reusable region information (3R) ,
wherein upon generation of the corrected image data from the second image data, the image correction process includes:
a first process which reuses a result of image process for correction to the pixel group of the first image data at the same coordinates for a region of the first pixel group of the second image data;
a second process which reuses a result of image process for correction to the pixel group of the first image data on the same axis in the paper conveying direction for a region of the second pixel group of the second image data; and
a third process which newly executes the image process for correction to a region of other pixel groups which have not been detected as the first pixel group and as the second pixel group of the second image data.

14. A program executed by a computer for an image processing apparatus (4) including a storage unit (67) which stores reusable region information (3R) for each of image data contained in a print job, the reusable region information including information relating to a first pixel group and a second pixel group, the first pixel group being detected from second image data to be processed, which are compared with first image data for reference, and having coordinates and constituting pixels, which are the same as those of a pixel group of the first image data, and the second pixel group being detected from the second image data compared with the first image data, and having a coordinate in a main scanning direction orthogonal to a paper conveying direction, and constituting pixels, which are the same as those of the pixel group of the first image data, but having a coordinate in the paper conveying direction different from the coordinate of the pixel group of the first image data, wherein:
the program includes a procedure of an image correction process which executes an image process for correction to the image data to generate corrected image data based on state information relating to the main scanning direction of a printer engine for forming an image on a recording material, and the reusable region information (3R); and
upon generation of the corrected image data from the second image data, the procedure of the image correction process includes:
a first step which reuses a result of image process for correction to the pixel group of the first image data at the same coordinates for a region of the first pixel group of the second image data;
a second step which reuses a result of image process for correction to the pixel group of the first image data on the same axis in the paper conveying direction for a region of the second pixel group of the second image data; and
a third step which newly executes the image process for correction to a region of other pixel groups which have not been detected as the first pixel group and as the second pixel group in the second image data.

## Patentansprüche

1. Bildverarbeitungssystem zum Ausführen eines Bildprozesses zur Korrektur von Bilddaten, die in einem Druckauftrag enthalten sind, umfassend:
einen ersten Bilddetektor (3, 73a), der konfiguriert ist, um erste Bilddaten als Referenz mit zweiten, zu verarbeitenden Bilddaten zu vergleichen, und der eine erste Pixelgruppe aus den zweiten Bilddaten erfasst, wobei die erste Pixelgruppe Koordinaten aufweist und Pixel bildet, welche dieselben wie diejenigen einer Pixelgruppe der ersten Bilddaten sind;
einen zweiten Bilddetektor (3, 73b), der konfiguriert ist, um die ersten Bilddaten mit den zweiten Bilddaten zu vergleichen, und der eine zweite Pixelgruppe aus den zweiten Bilddaten erfasst, wobei die zweite Pixelgruppe eine Koordinate in einer Hauptabtastrichtung orthogonal zu einer Papierförderrichtung aufweist, und Pixel bildet, welche dieselben wie diejenigen der Pixelgruppe der ersten Bilddaten sind, jedoch eine Koordinate in der Papierförderrichtung aufweisen, die sich von einer Koordinate der Pixelgruppe der ersten Bilddaten unterscheidet;
eine Speichereinheit (67), die konfiguriert ist, um wiederverwendbare Bereichsinformationen (3R) zu speichern, einschließlich Informationen, die sich auf die erste Pixelgruppe und die zweite Pixelgruppe für jede der Bilddaten beziehen, die in einem Druckauftrag enthalten sind; und
einen Bildprozessor (4, 82), der konfiguriert ist, um einen Bildprozess zur Korrektur der Bilddaten auszuführen, um korrigierte Bilddaten basierend auf Zustandsinformationen bezüglich der Hauptabtastrichtung einer Druckermaschine zum Bilden eines Bildes auf einem Aufzeichnungsmaterial und die wiederverwendbaren Bereichsinformationen (3R) zu erzeugen, wobei:
bei Erzeugung der korrigierten Bilddaten aus den zweiten Bilddaten der Bildprozessor (4, 82) ein Ergebnis des Bildprozesses zur Korrektur der Pixelgruppe der ersten Bilddaten bei denselben Koordinaten für einen Bereich der ersten Pixelgruppe der zweiten Bilddaten wiederverwendet, ein Ergebnis des Bildprozesses zur Korrektur der Pixelgruppe der ersten Bilddaten auf derselben Achse in der Papierübertragungsrichtung für einen Bereich der zweiten Pixelgruppe der zweiten Bilddaten wiederverwendet und den Bildprozess zur Korrektur eines Bereichs anderer Pixelgruppen, die nicht als die erste Pixelgruppe und die zweite Pixelgruppe der zweiten Bilddaten erfasst wurden, neu ausführt.

2. Bildverarbeitungssystem nach Anspruch 1, weiter umfassend eine temporäre Speichereinheit (63), die von dem Bildprozessor (4, 82) zum Ausführen des Bildprozesses zur Korrektur betrieben wird,
wobei bei Ausführung des Bildprozesses zur Korrektur der zweiten Bilddaten der Bildprozessor (4, 82) die korrigierten Bilddaten der ersten Bilddaten in die temporäre Speichereinheit (63) erweitert, das Ergebnis des Bildprozesses zur Korrektur der Pixelgruppe der ersten Bilddaten auf derselben Achse in der Papierförderrichtung wiederverwendet, um einen Bereich der zweiten Pixelgruppe der zweiten Bilddaten mit dem entsprechenden Bereich der korrigierten Bilddaten der ersten Bilddaten zu überschreiben und zu aktualisieren, den Bildprozess zur Korrektur des Bereichs der anderen Pixelgruppe der zweiten Bilddaten neu ausführt, um den Bereich der korrigierten Bilddaten der ersten Bilddaten zu aktualisieren, und die Bilddaten, die in die temporäre Speichereinheit (63) erweitert wurden, nach einem Ende der Aktualisierung der Bereiche der zweiten Pixelgruppe und der anderen Pixelgruppe auf die korrigierten Bilddaten der zweiten Bilddaten setzt.

3. Bildverarbeitungssystem nach Anspruch 1 oder 2, wobei die Zustandsinformationen, die sich auf die Hauptabtastrichtung der Druckermaschine beziehen, eine Fehlerposition in der Hauptabtastrichtung einer Düse eines Tintenstrahlkopfes für eine Tintenstrahlaufzeichnungseinrichtung (1) darstellen.

4. Bildverarbeitungssystem nach Anspruch 1 oder 2, wobei die ersten Bilddaten und die zweiten Bilddaten, die von dem ersten Bilddetektor (3, 73a) und dem zweiten Bilddetektor (3, 73b) verglichen werden, jeweils Druckseiten von getrennten Druckaufträgen entsprechen.

5. Bildverarbeitungssystem nach Anspruch 1 oder 2, wobei ein Seitenintervall zwischen einer Druckseite, die den ersten Bilddaten entspricht, und einer Druckseite, die den zweiten Bilddaten entspricht, die von dem ersten Bilddetektor (3, 73a) und dem zweiten Bilddetektor (3, 73b) verglichen werden, gemäß einer Speicherkapazität eines vom Bildprozessor (4, 82) verwendeten Speichers geändert wird.

6. Bildverarbeitungssystem nach Anspruch 1 oder 2, wobei eine Druckseite, die den ersten Bilddaten entspricht, und eine Druckseite, die den zweiten Bilddaten entspricht, die von dem ersten Bilddetektor (3, 73a) und dem zweiten Bilddetektor (3, 73b) verglichen werden, die gleiche Druckseite bilden.

7. Bildverarbeitungssystem nach einem der Ansprüche 1 oder 2, weiter umfassend:
eine zweite Speichereinheit, die konfiguriert ist, um ein Ergebnis des Bildprozesses zur Korrektur der ersten Bilddaten zu speichern;
einen Speicherbereich (61m) für Zwischenspeicherdaten; und
eine Zwischenspeicher-Datenverwaltungseinheit (84), die konfiguriert ist, um die in dem Speicherbereich gespeicherten Zwischenspeicherdaten zu verwalten,
wobei die Zwischenspeicher-Datenverwaltungseinheit (84) nur das Ergebnis des Bildprozesses zur Korrektur der ersten Bilddaten zur Wiederverwendung, entsprechend der zweiten Pixelgruppe der zweiten Bilddaten in dem Speicherbereich (61m), als die Zwischenspeicherdaten speichert.

8. Bildverarbeitungssystem nach Anspruch 1 oder 2, wobei bei der Erfassung, dass ein Prozentsatz der ersten Pixelgruppe und der zweiten Pixelgruppe zu den zweiten Bilddaten gleich oder höher als ein Schwellenwert ist, der durch eine Beziehung zwischen einer Druckgeschwindigkeit der Druckermaschine und einem Zeitraum, der für den Bildprozess zur Korrektur benötigt wird, definiert wird, der erste Bilddetektor (3, 73a) und der zweite Bilddetektor (3, 73b) die Erfassung der ersten Pixelgruppe und der zweiten Pixelgruppe abschließen.

9. Bildverarbeitungssystem nach Anspruch 1 oder 2, wobei der Bildprozessor (4, 82) beim Empfang einer Anweisung zum Ausführen des Bildprozesses zur Korrektur von der Druckermaschine während des Betriebs eines Druckauftrags den Bildprozess zur Korrektur an allen Bereichen nachfolgender Bilddaten unabhängig von den Erfassungsergebnissen des ersten Bilddetektors (3, 73a) und des zweiten Bilddetektors (3, 73b) neu ausführt.

10. Bildverarbeitungssystem nach einem der Ansprüche 1 bis 9, wobei der erste Bilddetektor (3, 73a), der zweite Bilddetektor (3, 73b) und der Bildprozessor (4, 82) in einer Einrichtung installiert sind.

11. Bildverarbeitungssystem nach einem der Ansprüche 1 bis 9, wobei der erste Bilddetektor (3, 73a), der zweite Bilddetektor (3, 73b) und der Bildprozessor (4, 82) verteilt in einer Vielzahl von Einrichtungen installiert sind.

12. Bildverarbeitungseinrichtung (2, 3, 4) zum Ausführen eines Bildprozesses zur Korrektur von Bilddaten, die in einem Druckauftrag enthalten sind, umfassend:
eine Speichereinheit (67), die konfiguriert ist, um wiederverwendbare Bereichsinformationen (3R) für jede in dem Druckauftrag enthaltene Bilddaten zu speichern, wobei die wiederverwendbaren Bereichsinformationen erste Pixelgruppeninformationen und zweite Pixelgruppeninformationen einschließen, wobei die ersten Pixelgruppeninformationen erfasst werden aus zweiten Bilddaten, die von einem ersten Bilddetektor (73a) zu verarbeiten sind, die mit ersten Bilddaten als Referenz verglichen werden und Koordinaten aufweisen und Pixel bilden, welche die gleichen sind wie diejenigen einer Pixelgruppe der ersten Bilddaten, und die zweiten Pixelgruppeninformation aus den zweiten Bilddaten im Vergleich zu den ersten Bilddaten von einem zweiten Bilddetektor (73b) erfasst werden und eine Koordinate in einer Hauptabtastrichtung orthogonal zu einer Papierförderrichtung aufweisen und Pixel bilden, welche die gleichen sind wie diejenigen der Pixelgruppe der ersten Bilddaten, die jedoch eine Koordinate in der Papierförderrichtung aufweisen, die sich von einer Koordinate der Pixelgruppe der ersten Bilddaten unterscheidet; und
einen Bildprozessor (82), der konfiguriert ist, um einen Bildprozess zur Korrektur der Bilddaten auszuführen, um korrigierte Bilddaten basierend auf Zustandsinformationen bezüglich der Hauptabtastrichtung einer Druckermaschine zum Bilden eines Bildes auf einem Aufzeichnungsmaterial zu erzeugen, und die wiederverwendbaren Bereichsinformationen (3R) zu erzeugen,
wobei bei Erzeugung der korrigierten Bilddaten aus den zweiten Bilddaten der Bildprozessor (82) konfiguriert ist, um ein Ergebnis des Bildprozesses zur Korrektur der Pixelgruppe der ersten Bilddaten bei denselben Koordinaten für einen Bereich der ersten Pixelgruppe der zweiten Bilddaten wiederzuverwenden, ein Ergebnis des Bildprozesses zur Korrektur der Pixelgruppe der ersten Bilddaten auf derselben Achse in der Papierübertragungsrichtung für einen Bereich der zweiten Pixelgruppe der zweiten Bilddaten wiederzuverwenden und den Bildprozess zur Korrektur eines Bereichs anderer Pixelgruppen, die nicht als die erste Pixelgruppe und als die zweite Pixelgruppe der zweiten Bilddaten erfasst wurden, neu auszuführen.

13. Bildverarbeitungsverfahren für ein Bildverarbeitungssystem, konfiguriert zum Ausführen eines Bildprozesses zur Korrektur von Bilddaten, die in einem Druckauftrag enthalten sind, wobei das Verfahren umfasst:
einen ersten Bilderfassungsprozess, der erste Bilddaten als Referenz mit zweiten, zu verarbeitenden Bilddaten vergleicht und eine erste Pixelgruppe aus den zweiten Bilddaten erfasst, wobei die erste Pixelgruppe Koordinaten aufweist und Pixel bildet, welche die gleichen wie diejenigen einer Pixelgruppe der ersten Bilddaten sind;
einen zweiten Bilderfassungsprozess, der die ersten Bilddaten mit den zweiten Bilddaten vergleicht und eine zweite Pixelgruppe aus den zweiten Bilddaten erfasst, wobei die zweite Pixelgruppe eine Koordinate in einer Hauptabtastrichtung orthogonal zu einer Papierförderrichtung aufweist und Pixel bildet, welche die gleichen wie diejenigen der Pixelgruppe der ersten Bilddaten sind, jedoch eine Koordinate in der Papierförderrichtung aufweisen, die sich von einer Koordinate der Pixelgruppe der ersten Bilddaten unterscheidet;
einen Speicherprozess, der wiederverwendbare Bereichsinformationen (3R), einschließlich Informationen, die sich auf die erste Pixelgruppe und die zweite Pixelgruppe beziehen, in einer Speichereinheit (67) für jede der Bilddaten, die in einem Druckauftrag enthalten sind, speichert; und
einen Bildkorrekturprozess, der einen Bildprozess zur Korrektur der Bilddaten ausführt, um korrigierte Bilddaten basierend auf den Zustandsinformationen bezüglich der Hauptabtastrichtung einer Druckermaschine zum Bilden eines Bildes auf einem Aufzeichnungsmaterial, und den wiederverwendbaren Bereichsinformationen (3R) zu erzeugen,
wobei bei der Erzeugung der korrigierten Bilddaten aus den zweiten Bilddaten der Bildkorrekturprozess einschließt:
einen ersten Prozess, der ein Ergebnis des Bildprozesses zur Korrektur der Pixelgruppe der ersten Bilddaten bei den gleichen Koordinaten für einen Bereich der ersten Pixelgruppe der zweiten Bilddaten wiederverwendet;
einen zweiten Prozess, der ein Ergebnis des Bildprozesses zur Korrektur der Pixelgruppe der ersten Bilddaten auf derselben Achse in der Papierförderrichtung für einen Bereich der zweiten Pixelgruppe der zweiten Bilddaten wiederverwendet; und
einen dritten Prozess, der den Bildprozess zur Korrektur in einem Bereich anderer Pixelgruppen neu ausführt, die nicht als die erste Pixelgruppe und als die zweite Pixelgruppe der zweiten Bilddaten erfasst wurden.

14. Programm, das von einem Computer für eine Bildverarbeitungseinrichtung (4) ausgeführt wird, einschließend eine Speichereinheit (67), die wiederverwendbare Bereichsinformationen (3R) für jede in einem Druckauftrag enthaltene Bilddaten speichert, wobei die wiederverwendbaren Bereichsinformationen Informationen bezüglich einer ersten Pixelgruppe und einer zweiten Pixelgruppe einschließen, wobei die erste Pixelgruppe erfasst wird aus zweiten, zu verarbeitenden Bilddaten, die mit ersten Bilddaten als Referenz verglichen werden und Koordinaten aufweisen und Pixel bilden, welche die gleichen sind wie diejenigen einer Pixelgruppe der ersten Bilddaten, und wobei die zweite Pixelgruppe aus den zweiten Bilddaten im Vergleich zu den ersten Bilddaten erfasst wird und eine Koordinate in einer Hauptabtastrichtung orthogonal zu einer Papierförderrichtung aufweisen und Pixel bilden, welche die gleichen sind wie diejenigen der Pixelgruppe der ersten Bilddaten, jedoch eine Koordinate in der Papierförderrichtung aufweisen, die sich von der Koordinate der Pixelgruppe der ersten Bilddaten unterscheidet, wobei:
das Programm eine Prozedur eines Bildkorrekturprozesses einschließt, der einen Bildprozess zur Korrektur der Bilddaten ausführt, um korrigierte Bilddaten basierend auf Zustandsinformationen bezüglich der Hauptabtastrichtung einer Druckermaschine zum Bilden eines Bildes auf einem Aufzeichnungsmaterial und den wiederverwendbaren Bereichsinformationen (3R) zu erzeugen,; und
bei der Erzeugung der korrigierten Bilddaten aus den zweiten Bilddaten die Prozedur des Bildkorrekturprozesses einschließt:
einen ersten Schritt, der ein Ergebnis des Bildprozesses zur Korrektur der Pixelgruppe der ersten Bilddaten bei denselben Koordinaten für einen Bereich der ersten Pixelgruppe der zweiten Bilddaten wiederverwendet;
einen zweiten Schritt, der ein Ergebnis des Bildprozesses zur Korrektur der Pixelgruppe der ersten Bilddaten auf derselben Achse in der Papierförderrichtung für einen Bereich der zweiten Pixelgruppe der zweiten Bilddaten wiederverwendet; und
einen dritten Schritt, der den Bildprozess zur Korrektur in einem Bereich anderer Pixelgruppen neu ausführt, die nicht als die erste Pixelgruppe und als die zweite Pixelgruppe in den zweiten Bilddaten erfasst wurden.

## Revendications

1. Système de traitement d'image pour exécuter un procédé d'image de correction de données d'image contenues dans un travail d'impression, comprenant :
un premier détecteur d'image (3, 73a) qui est configuré pour comparer des premières données d'image pour référence à des secondes données d'image devant être traitées, et détecte un premier groupe de pixels à partir des secondes données d'image, le premier groupe de pixels présentant des coordonnées et des pixels constituants, qui sont les mêmes que ceux d'un groupe de pixels des premières données d'image ;
un second détecteur d'image (3, 73b) qui est configuré pour comparer les premières données d'image aux secondes données d'image, et détecte un second groupe de pixels à partir des secondes données d'image, le second groupe de pixels présentant une coordonnée dans une direction de balayage principale orthogonale à une direction d'acheminement de papier, et des pixels constituants, qui sont les mêmes que ceux du groupe de pixels des premières données d'image, mais présentant une coordonnée dans la direction d'acheminement de papier différente d'une coordonnée du groupe de pixels des premières données d'image ;
une unité de stockage (67) qui est configurée pour stocker des informations de région réutilisable (3R) incluant des informations relatives au premier groupe de pixels et au second groupe de pixels pour chacune de données d'image contenues dans un travail d'impression ; et
un processeur d'image (4, 82) qui est configuré pour exécuter un procédé d'image de correction des données d'image pour générer des données d'image corrigées sur la base d'informations d'état relatives à la direction de balayage principale d'un moteur d'imprimante pour former une image sur un support d'enregistrement, et des informations de région réutilisable (3R), dans lequel :
lors de la génération des données d'image corrigées à partir des secondes données d'image, le processeur d'image (4, 82) réutilise un résultat de procédé d'image de correction du groupe de pixels des premières données d'image aux mêmes coordonnées pour une région du premier groupe de pixels des secondes données d'image, réutilise un résultat de procédé d'image de correction du groupe de pixels des premières données d'image sur le même axe dans la direction d'acheminement de papier pour une région du second groupe de pixels des secondes données d'image, et exécute nouvellement le procédé d'image de correction d'une région d'autres groupes de pixels qui n'ont pas été détectés en tant que premier groupe de pixels et en tant que second groupe de pixels des secondes données d'image.

2. Système de traitement d'image selon la revendication 1, comprenant en outre une unité de stockage temporaire (63) actionnée par le processeur d'image (4, 82) pour exécuter le procédé d'image de correction,
dans lequel lors de l'exécution du procédé d'image de correction des secondes données d'image, le processeur d'image (4, 82) élargit les données d'image corrigées des premières données d'image dans l'unité de stockage temporaire (63), réutilise le résultat de traitement d'image de correction du groupe de pixels des premières données d'image sur le même axe dans la direction d'acheminement de papier pour écraser et mettre à jour une région du second groupe de pixels des secondes données d'image avec la région correspondante des données d'image corrigées des premières données d'image, exécute nouvellement le procédé d'image de correction de la région de l'autre groupe de pixels des secondes donnés d'image pour mettre à jour la région des données d'image corrigées des premières données d'image, et règle les données d'image élargies dans l'unité de stockage temporaire (63) après une fin de mise à jour des régions du second groupe de pixels et de l'autre groupe de pixels avec les données d'image corrigées des secondes données d'image.

3. Système de traitement d'image selon la revendication 1 ou 2, dans lequel les informations d'état relatives à la direction de balayage principale du moteur d'imprimante représentent une position par défaut dans la direction de balayage principale d'une buse d'une tête à jet d'encre pour un appareil d'enregistrement à jet d'encre (1).

4. Système de traitement d'image selon la revendication 1 ou 2, dans lequel les premières données d'image et les secondes données d'image qui sont comparées par le premier détecteur d'image (3, 73a) et le second détecteur d'image (3, 73b) correspondent à des pages d'impression de travaux d'impression distincts, respectivement.

5. Système de traitement d'image selon la revendication 1 ou 2, dans lequel un intervalle de pages entre une page d'impression correspondant aux premières données d'image et une page d'impression correspondant aux secondes données d'image, qui sont comparées par le premier détecteur d'image (3, 73a) et le second détecteur d'image (3, 73b), est changé conformément à une capacité de stockage d'une mémoire utilisée par le processeur d'image (4, 82).

6. Système de traitement d'image selon la revendication 1 ou 2, dans lequel une page d'impression correspondant aux premières données d'image et une page d'impression correspondant aux secondes données d'image, qui sont comparées par le premier détecteur d'image (3, 73a) et le second détecteur d'image (3, 73b), constituent la même page d'impression.

7. Système de traitement d'image selon la revendication 1 ou 2, comprenant en outre :
une seconde unité de stockage qui est configurée pour stocker un résultat de procédé d'image de correction des premières données d'image ;
une région de stockage (61m) pour des données de cache ; et
une unité de gestion de données de cache (84) qui est configurée pour gérer les données de cache stockées dans la région de stockage,
dans lequel l'unité de gestion de données de cache (84) stocke uniquement le résultat de procédé d'image de correction des premières données d'image pour une réutilisation, correspondant au second groupe de pixels des secondes données d'image dans la région de stockage (61m) en tant que données de cache.

8. Système de traitement d'image selon la revendication 1 ou 2, dans lequel lorsqu'il est détecté qu'un pourcentage du premier groupe de pixels et du second groupe de pixels par rapport aux secondes données d'image est égal ou supérieur à une valeur seuil qui est définie par une relation entre une vitesse d'impression du moteur d'imprimante et une période de temps nécessaire au procédé d'image de correction, le premier détecteur d'image (3, 73a) et le second détecteur d'image (3, 73b) finissent une détection du premier groupe de pixels et du second groupe de pixels.

9. Système de traitement d'image selon la revendication 1 ou 2, dans lequel lors de la réception d'une instruction pour exécuter le procédé d'image de correction à partir du moteur d'imprimante pendant l'opération d'un travail d'impression, le processeur d'image (4, 82) exécute nouvellement le procédé d'image pour corriger toutes les régions de données d'image ultérieures quels que soient les résultats de détection du premier détecteur d'image (3, 73a) et du second détecteur d'image (3, 73b).

10. Système de traitement d'image selon l'une quelconque des revendications 1 à 9, dans lequel le premier détecteur d'image (3, 73a), le second détecteur d'image (3, 73b) et le processeur d'image (4, 82) sont installés dans un appareil.

11. Système de traitement d'image selon l'une quelconque des revendications 1 à 9, dans lequel le premier détecteur d'image (3, 73a), le second détecteur d'image (3, 73b) et le processeur d'image (4, 82) sont installés de manière dispersée dans une pluralité d'appareils.

12. Appareil de traitement d'image (2, 3, 4) pour exécuter un procédé d'image de correction de données d'image contenues dans un travail d'impression, comprenant :
une unité de stockage (67) qui est configurée pour stocker des informations de région réutilisable (3R) pour chacune de données d'image contenues dans le travail d'impression, les informations de région réutilisable incluant des premières informations de groupe de pixels et des secondes informations de groupe de pixels, les premières informations de groupe de pixels étant détectées à partir de secondes données d'image devant être traitées par un premier détecteur d'image (73a), qui sont comparées à des premières données d'image pour référence, et présentant des coordonnées et des pixels constituants, qui sont les mêmes que ceux d'un groupe de pixels des premières données d'image, et les secondes informations de groupe de pixels étant détectées à partir des secondes données d'image comparées aux premières données d'image par un second détecteur d'image (73b), et présentant une coordonnée dans une direction de balayage principale orthogonale à une direction d'acheminement de papier, et des pixels constituants, qui sont les mêmes que ceux du groupe de pixels des premières données d'image, mais présentant une coordonnée dans la direction d'acheminement de papier différente d'une coordonnée du groupe de pixels des premières données d'image ; et
un processeur d'image (82) qui est configuré pour exécuter un procédé d'image de correction des données d'image pour générer des données d'image corrigées sur la base d'informations d'état relatives à la direction de balayage principale d'un moteur d'imprimante pour former une image sur un support d'enregistrement, et des informations de région réutilisable (3R),
dans lequel lors de la génération des données d'image corrigées à partir des secondes données d'image, le processeur d'image (82) est configuré pour réutiliser un résultat de procédé d'image de correction du groupe de pixels des premières données d'image aux mêmes coordonnées pour une région du premier groupe de pixels des secondes données d'image, réutiliser un résultat de procédé d'image de correction du groupe de pixels des premières données d'image sur le même axe dans la direction d'acheminement de papier pour une région du second groupe de pixels des secondes données d'image, et exécuter nouvellement le procédé d'image de correction d'une région d'autres groupes de pixels qui n'ont pas été détectés en tant que premier groupe de pixels et en tant que second groupe de pixels des secondes données d'image.

13. Procédé de traitement d'image pour un système de traitement d'image configuré pour exécuter un procédé d'image de correction de données d'image contenues dans un travail d'impression, le procédé comprenant :
un premier procédé de détection d'image qui compare des premières données d'image pour référence à des secondes données d'image devant être traitées, et détecte un premier groupe de pixels à partir des secondes données d'image, le premier groupe de pixels présentant des coordonnées et des pixels constituants, qui sont les mêmes que ceux d'un groupe de pixels des premières données d'image ;
un second procédé de détection d'image qui compare les premières données d'image aux secondes données d'image, et détecte un second groupe de pixels à partir des secondes données d'image, le second groupe de pixels présentant une coordonnée dans une direction de balayage principale orthogonale à une direction d'acheminement de papier, et des pixels constituants, qui sont les mêmes que ceux du groupe de pixels des premières données d'image, mais présentant une coordonnée dans la direction d'acheminement de papier différente d'une coordonnée du groupe de pixels des premières données d'image ;
un procédé de stockage qui stocke des informations de région réutilisable (3R) incluant des informations relatives au premier groupe de pixels et au second groupe de pixels dans une unité de stockage (67) pour chacune de données d'image contenues dans un travail d'impression ; et
un procédé de correction d'image qui exécute un procédé d'image de correction des données d'image pour générer des données d'image corrigées sur la base des informations d'état relatives à la direction de balayage principale d'un moteur d'imprimante pour former une image sur un support d'enregistrement, et des informations de région réutilisable (3R),
dans lequel lors de la génération des données d'image corrigées à partir des secondes données d'image, le procédé de correction d'image inclut :
un premier procédé qui réutilise un résultat de procédé d'image de correction du groupe de pixels des premières données d'image aux mêmes coordonnées pour une région du premier groupe de pixels des secondes données d'image ;
un deuxième procédé qui réutilise un résultat de procédé d'image de correction du groupe de pixels des premières données d'image sur le même axe dans la direction d'acheminement de papier pour une région du second groupe de pixels des secondes données d'image ; et
un troisième procédé qui exécute nouvellement le procédé d'image de correction d'une région d'autres groupes de pixels qui n'ont pas été détectés en tant que premier groupe de pixels et en tant que second groupe de pixels des secondes données d'image.

14. Programme exécuté par un ordinateur pour un appareil de traitement d'image (4) incluant une unité de stockage (67) qui stocke des informations de région réutilisable (3R) pour chacune de données d'image contenues dans un travail d'impression, les informations de région réutilisable incluant des informations relatives à un premier groupe de pixels et un second groupe de pixels, le premier groupe de pixels étant détecté à partir de secondes données d'image devant être traitées, qui sont comparées à des premières données d'image pour référence, et présentant des coordonnées et des pixels constituants, qui sont les mêmes que ceux d'un groupe de pixels des premières données d'image, et le second groupe de pixels étant détecté à partir des secondes données d'image comparées aux premières données d'image, et présentant une coordonnée dans une direction de balayage principale orthogonale à une direction d'acheminement de papier, et des pixels constituants, qui sont les mêmes que ceux du groupe de pixels des premières données d'image, mais présentant une coordonnée dans la direction d'acheminement de papier différente de la coordonnée du groupe de pixels des premières donnée d'image, dans lequel :
le programme inclut une procédure d'un procédé de correction d'image qui exécute un procédé d'image de correction des données d'image pour générer des données d'image corrigées sur la base d'informations d'état relatives à la direction de balayage principale d'un moteur d'imprimante pour former une image sur un support d'enregistrement, et des informations de région réutilisable (3R) ; et
lors de la génération des données d'image corrigées à partir des secondes données d'image, la procédure du procédé de correction d'image inclut :
une première étape qui réutilise un résultat de procédé d'image de correction du groupe de pixels des premières données d'image aux mêmes coordonnées pour une région du premier groupe de pixels des secondes données d'image ;
une deuxième étape qui réutilise un résultat de procédé d'image de correction du groupe de pixels des premières données d'image sur le même axe dans la direction d'acheminement de papier pour une région du second groupe de pixels des secondes données d'image ; et
une troisième étape qui exécute nouvellement le procédé d'image de correction d'une région d'autres groupes de pixels qui n'ont pas été détectés en tant que premier groupe de pixels et en tant que second groupe de pixels dans les secondes données d'image.
